(19)

**Europäisches Patentamt**
**European Patent Office**
**Office européen des brevets**

(11) **EP 4 589 500 A1**

(12) **EUROPEAN PATENT APPLICATION**

(43) Date of publication:
**23.07.2025 Bulletin 2025/30**

(21) Application number: **25151629.0**

(22) Date of filing: **14.01.2025**

(51) International Patent Classification (IPC):
**G06Q 10/04** *(2023.01)* **G06Q 50/02** *(2024.01)*
**G01W 1/14** *(2006.01)*

(52) Cooperative Patent Classification (CPC):
**G06Q 50/02; G06Q 10/04**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **19.01.2024 IN 202421004041**

(71) Applicant: **Tata Consultancy Services Limited**
**Maharashtra (IN)**

(72) Inventors:
• **PANDIT, ANKUR**
**452005 Indore, Madhya Pradesh (IN)**
• **MOHITE, JAYANTRAO**
**400606 Thane West, Maharashtra (IN)**
• **SAWANT, SURYAKANT ASHOK**
**411057 Pune, Maharashtra (IN)**
• **PAPPULA, SRINIVASU**
**500034 Hyderabad, Telangana (IN)**

(74) Representative: **Goddar, Heinz J.**
**Boehmert & Boehmert**
**Anwaltspartnerschaft mbB**
**Pettenkoferstrasse 22**
**80336 München (DE)**

(54) **METHODS AND SYSTEMS FOR GROUND WATER PREDICTION USING INTEGRATION OF SATELLITE AND AUXILIARY OBSERVATIONS**

(57) The disclosure relates generally to methods and systems for ground water prediction using integration of satellite and auxiliary observations. Conventional techniques in the art for the ground water level prediction are not accurate and efficient for predicting the ground water level. The present disclosure combines time-series archived remote sensing data with a wide array of past auxiliary datasets specific to a given region for precise prediction of future ground water condition, to predict the ground water situation i.e. rising or declining for a given region. These encompass diverse information such as weather conditions, soil properties, agricultural data, population statistics, water resources information, industrial details, drought records, seismic data, and surface deformation patterns. The present disclosure also considers different future scenarios which can be built on future cropping patterns, forecasted weather conditions, use of irrigation system in future, and future population growth of the given region.

FIG. 2

EP 4 589 500 A1

Processed by Luminess, 75001 PARIS (FR)

**Description**

CROSS-REFERENCE TO RELATED APPLICATIONS AND PRIORITY

The present application claims priority to Indian application no. 202421004041, filed on January 19, 2024.

TECHNICAL FIELD

The disclosure herein generally relates to the field of ground water prediction, and more specifically to methods and systems for ground water prediction using integration of satellite and auxiliary observations.

BACKGROUND

Ground water depletion is the new challenge as it impacts the environment, causes land subsidence, and increases the risk of flooding in coastal areas. The reasons for ground water depletion are over-exploitation of ground water from agriculture, population growth, urbanization, and climate change, which affect precipitation patterns and ground water recharge. Forecasting of future ground water levels helps in effective decision-making, promotes responsible water management practices, and helps ensure the long-term availability of this vital resource for future generations. Conventional techniques in the art for ground water level prediction employ various types of models, including hydrogeological, statistical, and ground water flow-based models. These models mostly utilized remote sensing data to extract specific parameters individually or in combination for the modelling.

However, there are several other parameters such as population, industrial usage, environmental parameters and so on which are contributing to the depletion of ground water, and without considering those parameters it may lead to imbalance in the forecasting the ground water level. Hence the conventional techniques in the art for the ground water level prediction are not accurate and efficient for predicting the ground water level.

SUMMARY

Embodiments of the present disclosure present technological improvements as solutions to one or more of the above-mentioned technical problems recognized by the inventors in conventional systems.

In an aspect, a processor-implemented method for ground water prediction using integration of satellite and auxiliary observations is provided. The method including the steps of: receiving an input data associated to a predefined geographical region for which a ground water level is to be predicted, from a remote sensing satellite data and one or more input information sources; determining an input parameter data associated to the predefined geographical region for which the ground water level is to be predicted, from the input data, wherein the input parameter data is of a predefined time period and comprises one or more of (i) one or more weather related parameters, (ii) one or more soil related parameters, (iii) one or more agriculture related parameters, (iv) one or more population related parameters, (v) one or more surface water related parameters, (vi) one or more industry related parameters, (vii) one or more drought related parameters, (viii) one or more seismic related parameters, and (ix) one or more surface deformation related parameters; passing the input parameter data of the one or more weather related parameters and the one or more soil related parameters, to a weather and soil process-based model, to obtain an amount of total surface water from rainfall infiltrated to aquifer during the predefined time period; passing the input parameter data of the one or more agriculture related parameters, to an agriculture process-based model, to obtain an amount of ground water extracted from aquifer for agriculture during the predefined time period; passing the input parameter data of the one or more population related parameters, to a population process-based model, to obtain a net amount of ground water extracted from aquifer by population during the predefined time period; passing the input parameter data of the one or more soil related parameters and the one or more surface water related parameters, to a soil and surface process-based model, to obtain a net amount of ground water infiltrated to aquifer through one or more water sources during the predefined time period; passing the input parameter data of the one or more industry related parameters, to an industry process-based model, to obtain a net amount of ground water extracted from aquifer for industrial use during the predefined time period; passing the input parameter data of the one or more drought related parameters, to a pretrained machine learning model for drought, to obtain a drought index for the predefined time period; passing the input parameter data of the one or more seismic related parameters, to a seismic process-based model, to obtain a seismic index for the predefined time period; passing the input parameter data of the one or more surface deformation related parameters, to a surface deformation process-based model, to obtain an amount of total surface deformation during the predefined time period; passing (i) the amount of total surface water from rainfall infiltrated to aquifer during the predefined time period, (ii) the amount of ground water extracted from aquifer for agriculture during the predefined time period, (iii) the net amount of ground water extracted from aquifer by population during the predefined time period, (iv) the net amount of ground water infiltrated to aquifer through one or more water sources during the predefined time period, (v) the net amount of ground water extracted from aquifer for industrial use during the predefined time period, (vi) the drought index for the predefined time period, (vii) the seismic index for the predefined time period, (viii) the amount of total surface deformation during the predefined time period, to a process-based weighted integrated forecasting model, to predict the ground water level of the predefined geographical region; receiving a forecasted input data associated to the predefined geographical region for which a ground water level is to be predicted, from the remote sensing satellite data and one or more input information sources; determining a forecasted input parameter data is of the predefined time period and comprises of (i) the one or more weather related parameters, (ii) the one or more soil related parameters, (iii) the one or more agriculture related parameters, (iv) the one or more population related parameters, (v) the one or more surface water related parameters, (vi) the one or more industry related parameters, (vii) the one or more drought related parameters, (viii) the one or more seismic related parameters, and (ix) the one or more surface deformation related parameters; determining (i) the amount of total surface water from rainfall infiltrated to aquifer during the predefined time period, (ii) the amount of ground water extracted from aquifer for agriculture during the predefined time period, (iii) the net amount of ground water extracted from aquifer by population during the predefined time period, (iv) the net amount of ground water infiltrated to aquifer through one or more water sources during the predefined time period, (v) the net amount of ground water extracted from aquifer for industrial use during the predefined time period, (vi) the drought index for the predefined time period, (vii) the seismic index for the predefined time period, (viii) the amount of total surface deformation during the predefined time period, from the forecasted input parameter data; and passing (i) the amount of total surface water from rainfall infiltrated to aquifer during the predefined time period, (ii) the amount of ground water extracted from aquifer for agriculture during the predefined time period, (iii) the net amount of ground water extracted from aquifer by population during the predefined time period, (iv) the net amount of ground water infiltrated to aquifer through one or more water sources during the predefined time period, (v) the net amount of ground water extracted from aquifer for industrial use during the predefined time period, (vi) the drought index for the predefined time period, (vii) the seismic index for the predefined time period, (viii) the amount of total surface deformation during the predefined time period, to the process-based weighted integrated forecasting model, to predict a forecasted ground water level of the predefined geographical region.

In another aspect, a system for ground water prediction using integration of satellite and auxiliary observations is provided. The system includes: a memory storing instructions; one or more Input/Output (I/O) interfaces; and one or more hardware processors coupled to the memory via the one or more I/O interfaces, wherein the one or more hardware processors are configured by the instructions to: receive an input data associated to a predefined geographical region for which a ground water level is to be predicted, from a remote sensing satellite data and one or more input information sources; determine an input parameter data associated to the predefined geographical region for which the ground water level is to be predicted, from the input data, wherein the input parameter data is of a predefined time period and comprises one or more of (i) one or more weather related parameters, (ii) one or more soil related parameters, (iii) one or more agriculture related parameters, (iv) one or more population related parameters, (v) one or more surface water related parameters, (vi) one or more industry related parameters, (vii) one or more drought related parameters, (viii) one or more seismic related parameters, and (ix) one or more surface deformation related parameters; pass the input parameter data of the one or more weather related parameters and the one or more soil related parameters, to a weather and soil process-based model, to obtain an amount of total surface water from rainfall infiltrated to aquifer during the predefined time period; pass the input parameter data of the one or more agriculture related parameters, to an agriculture process-based model, to obtain an amount of ground water extracted from aquifer for agriculture during the predefined time period; pass the input parameter data of the one or more population related parameters, to a population process-based model, to obtain a net amount of ground water extracted from aquifer by population during the predefined time period; pass the input parameter data of the one or more soil related parameters and the one or more surface water related parameters, to a soil and surface process-based model, to obtain a net amount of ground water infiltrated to aquifer through one or more water sources during the predefined time period; pass the input parameter data of the one or more industry related parameters, to an industry process-based model, to obtain a net amount of ground water extracted from aquifer for industrial use during the predefined time period; pass the input parameter data of the one or more drought related parameters, to a pretrained machine learning model for drought, to obtain a drought index for the predefined time period; pass the input parameter data of the one or more seismic related parameters, to a seismic process-based model, to obtain a seismic index for the predefined time period; pass the input parameter data of the one or more surface deformation related parameters, to a surface deformation process-based model, to obtain an amount of total surface deformation during the predefined time period; pass (i) the amount of total surface water from rainfall infiltrated to aquifer during the predefined time period, (ii) the amount of ground water extracted from aquifer for agriculture during the predefined time period, (iii) the net amount of ground water extracted from aquifer by population during the predefined time period, (iv) the net amount of ground water infiltrated to aquifer through one or more water sources during the predefined time period, (v) the net amount of ground water extracted from aquifer for industrial use during the predefined time period, (vi) the drought index for the predefined time period, (vii) the seismic index for the predefined time period, (viii) the amount of total surface deformation during the predefined time period, to a process-based weighted integrated forecasting model, to predict the ground water level of the predefined geographical region; receive a forecasted input data associated to the predefined geographical region for which a ground water level is to be predicted, from the remote sensing satellite data and one or more input information sources; determine a forecasted input parameter data is of the predefined time period and comprises of (i) the one or more weather related parameters, (ii) the one or more soil related parameters, (iii) the one or more agriculture related parameters, (iv) the one or more population related parameters, (v) the one or more surface water related parameters, (vi) the one or more industry related parameters, (vii) the one or more drought related parameters, (viii) the one or more seismic related parameters, and (ix) the one or more surface deformation related parameters; determine (i) the amount of total surface water from rainfall infiltrated to aquifer during the predefined time period, (ii) the amount of ground water extracted from aquifer for agriculture during the predefined time period, (iii) the net amount of ground water extracted from aquifer by population during the predefined time period, (iv) the net amount of ground water infiltrated to aquifer through one or more water sources during the predefined time period, (v) the net amount of ground water extracted from aquifer for industrial use during the predefined time period, (vi) the drought index for the predefined time period, (vii) the seismic index for the predefined time period, (viii) the amount of total surface deformation during the predefined time period, from the forecasted input parameter data; and pass (i) the amount of total surface water from rainfall infiltrated to aquifer during the predefined time period, (ii) the amount of ground water extracted from aquifer for agriculture during the predefined time period, (iii) the net amount of ground water extracted from aquifer by population during the predefined time period, (iv) the net amount of ground water infiltrated to aquifer through one or more water sources during the predefined time period, (v) the net amount of ground water extracted from aquifer for industrial use during the predefined time period, (vi) the drought index for the predefined time period, (vii) the seismic index for the predefined time period, (viii) the amount of total surface deformation during the predefined time period, to the process-based weighted integrated forecasting model, to predict a forecasted ground water level of the predefined geographical region.

In yet another aspect, there are provided one or more non-transitory machine-readable information storage mediums comprising one or more instructions which when executed by one or more hardware processors cause: receiving an input data associated to a predefined geographical region for which a ground water level is to be predicted, from a remote sensing satellite data and one or more input information sources; determining an input parameter data associated to the predefined geographical region for which the ground water level is to be predicted, from the input data, wherein the input parameter data is of a predefined time period and comprises one or more of (i) one or more weather related parameters, (ii) one or more soil related parameters, (iii) one or more agriculture related parameters, (iv) one or more population related parameters, (v) one or more surface water related parameters, (vi) one or more industry related parameters, (vii) one or more drought related parameters, (viii) one or more seismic related parameters, and (ix) one or more surface deformation related parameters; passing the input parameter data of the one or more weather related parameters and the one or more soil related parameters, to a weather and soil process-based model, to obtain an amount of total surface water from rainfall infiltrated to aquifer during the predefined time period; passing the input parameter data of the one or more agriculture related parameters, to an agriculture process-based model, to obtain an amount of ground water extracted from aquifer for agriculture during the predefined time period; passing the input parameter data of the one or more population related parameters, to a population process-based model, to obtain a net amount of ground water extracted from aquifer by population during the predefined time period; passing the input parameter data of the one or more soil related parameters and the one or more surface water related parameters, to a soil and surface process-based model, to obtain a net amount of ground water infiltrated to aquifer through one or more water sources during the predefined time period; passing the input parameter data of the one or more industry related parameters, to an industry process-based model, to obtain a net amount of ground water extracted from aquifer for industrial use during the predefined time period; passing the input parameter data of the one or more drought related parameters, to a pretrained machine learning model for drought, to obtain a drought index for the predefined time period; passing the input parameter data of the one or more seismic related parameters, to a seismic process-based model, to obtain a seismic index for the predefined time period; passing the input parameter data of the one or more surface deformation related parameters, to a surface deformation process-based model, to obtain an amount of total surface deformation during the predefined time period; passing (i) the amount of total surface water from rainfall infiltrated to aquifer during the predefined time period, (ii) the amount of ground water extracted from aquifer for agriculture during the predefined time period, (iii) the net amount of ground water extracted from aquifer by population during the predefined time period, (iv) the net amount of ground water infiltrated to aquifer through one or more water sources during the predefined time period, (v) the net amount of ground water extracted from aquifer for industrial use during the predefined time period, (vi) the drought index for the predefined time period, (vii) the seismic index for the predefined time period, (viii) the amount of total surface deformation during the predefined time period, to a process-based weighted integrated forecasting model, to predict the ground water level of the predefined geographical region; receiving a forecasted input data associated to the predefined geographical region for which a ground water level is to be predicted, from the remote sensing satellite data and one or more input information sources; determining a forecasted input parameter data is of the predefined time period and comprises of (i) the one or more weather related parameters, (ii) the one or more soil related parameters, (iii) the one or more agriculture related parameters, (iv) the one or more population related parameters, (v) the one or more surface water related parameters, (vi) the one or more industry related parameters, (vii) the one or more drought related parameters, (viii) the one or more seismic related parameters, and (ix) the one or more surface deformation related parameters; determining (i) the amount of total surface water from rainfall infiltrated to aquifer during the predefined time period, (ii) the amount of ground water extracted from aquifer for agriculture during the predefined time period, (iii) the net amount of ground water extracted from aquifer by population during the predefined time period, (iv) the net amount of ground water infiltrated to aquifer through one or more water sources during the predefined time period, (v) the net amount of ground water extracted from aquifer for industrial use during the predefined time period, (vi) the drought index for the predefined time period, (vii) the seismic index for the predefined time period, (viii) the amount of total surface deformation during the predefined time period, from the forecasted input parameter data; and passing (i) the amount of total surface water from rainfall infiltrated to aquifer during the predefined time period, (ii) the amount of ground water extracted from aquifer for agriculture during the predefined time period, (iii) the net amount of ground water extracted from aquifer by population during the predefined time period, (iv) the net amount of ground water infiltrated to aquifer through one or more water sources during the predefined time period, (v) the net amount of ground water extracted from aquifer for industrial use during the predefined time period, (vi) the drought index for the predefined time period, (vii) the seismic index for the predefined time period, (viii) the amount of total surface deformation during the predefined time period, to the process-based weighted integrated forecasting model, to predict a forecasted ground water level of the predefined geographical region.

In an embodiment, the one or more weather related parameters comprises (i) a daily rainfall, (ii) a daily land surface temperature, and (iii) a daily evapotranspiration rate. The one or more soil related parameters comprises (i) a soil type, (ii) a soil compaction index (SCI), (iii) a soil saturation level (SSL), and (iv) a soil infiltration capacity. The one or more agriculture related parameters comprises (i) a total agriculture area, (ii) of crop grown in each season, and (iii) a crop grown area in each season. The one or more population related parameters comprises (i) a year-wise population amount, (ii) a population growth rate, (iii) a year-wise number of residential establishments, (iv) a year-wise number of residential establishments with ground water recharge facilities, and (v) a year-wise area of residential establishments with ground water recharge facilities. The one or more surface water related parameters comprises (i) a total area of one or more water reserve sources, and (ii) a total water holding capacity of the one or more water reserve sources. The one or more industry related parameters comprises (i) a year-wise number of industry establishments, (ii) year-wise type of industry establishments, (iii) a year-wise total amount of ground water utilized by industry establishments, (iv) a year-wise number of industry establishments with ground water recharge facilities, (v) a year-wise area of permanent industry establishments with ground water recharge facilities, and (vi) a year-wise total amount of rain water given to aquifer by industry establishments. The one or more drought related parameters comprises (i) a season-wise spatially distributed drought affected area, and (ii) a season-wise spatially distributed drought intensity. The one or more seismic related parameters comprises (i) a region of interest (RoI) seismic zone type, and (ii) a year-wise seismic magnitude. The one or more surface deformation related parameters comprises a year-wise amount of land surface deformation.

It is to be understood that both the foregoing general description and the following detailed description are exemplary and explanatory only and are not restrictive of the invention, as claimed.

BRIEF DESCRIPTION OF THE DRAWINGS

The accompanying drawings, which are incorporated in and constitute a part of this disclosure, illustrate exemplary embodiments and, together with the description, serve to explain the disclosed principles:

FIG. 1 is an exemplary block diagram of a system for ground water prediction using integration of satellite and auxiliary observations, in accordance with some embodiments of the present disclosure.
FIG. 2 is an exemplary block diagram illustrating a plurality of modules of the system of FIG. 1, for ground water prediction using integration of satellite and auxiliary observations, in accordance with some embodiments of the present disclosure.
FIGS. 3A through 3C illustrate exemplary flow diagrams of a processor-implemented method for ground water prediction using integration of satellite and auxiliary observations, using the system of FIG. 1, in accordance with some embodiments of the present disclosure.

DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

Ground water depletion refers to the long-term decline in the water levels of underground aquifers. The primary cause of ground water over-exploitation has been the rising demand for ground water from agriculture. A shift toward water-intensive or cash crops for financial gain has become a reason for the depletion of ground water. In India, state governments offered subsidized/free electricity to smallholder farmers for pumping ground water for irrigation which consequently led to widespread ground water depletion. Apart from agriculture, the other factors contributing to depletion includes population growth, urbanization, and climate change, which affect precipitation patterns and ground water recharge. Ground water depletion impacts the environment, and causes land subsidence which can damage infrastructure, such as buildings, roads, and pipelines, and increase the risk of flooding in coastal areas. The water level data collected by Central Ground Water Board (CGWB) during the year 2021, when compared with the decadal mean of November 2011 to November 2020, indicates that about 30% of the wells monitored have registered decline in ground water level.

knowledge about future ground water depletion is crucial for proactive water resource planning, sustainable agriculture, environmental conservation, infrastructure development, policy formulation, and stakeholder engagement. It enables effective decision-making, promotes responsible water management practices, and helps ensure the long-term availability of this vital resource for future generations.

In the past, several studies have been conducted using various types of models, including hydrogeological, statistical, and ground water flow-based models. These models utilized remote sensing data to extract specific parameters for modeling. Hydrogeological models aimed to represent the physical and hydrological characteristics of an aquifer system, incorporating data on ground water levels, recharge rates, and hydraulic properties of the subsurface. Statistical methods involved the analysis of historical ground water data to identify patterns, trends, and correlations. Ground water flow models, on the other hand, simulated the movement of ground water through an aquifer by solving mathematical equations based on physical laws and boundary conditions. As most of these methods relied on subset of parameters or focused on considering individual datasets such as satellite, they are limited in terms of precision as the holistic parameterization.

However, none of these models collectively considered comprehensive parameters such as weather conditions, soil properties, agriculture data, population data, water resources information, industry details, drought information, seismic data, and surface deformation trends over the years for the specific region under study. Importantly, there is impact of earthquake and land subsidence on the ground water movement. The ground water of the region can be influenced by each of these parameters separately, and it is crucial to comprehend their collective impact on ground water depletion. Consideration of these parameters helps in precise prediction of ground water. Therefore, a model is required where comprehensive parameterization needs to be considered.

The present disclosure solves the technical problems in the art with the methods and systems for ground water prediction using integration of satellite and auxiliary observations. The present disclosure predicts the ground water situation i.e. rising or declining for a given region based on the archived remote sensing and comprehensive auxiliary datasets i.e. weather conditions, soil properties, agriculture data, population data, water resources information, industry details, drought information, seismic data, and surface deformation trends. The present disclosure also considers different future scenarios such as cropping pattern, weather conditions, use of irrigation system etc. Accurate ground water prediction over the large duration based on our proposed approach can help farmers to plan their irrigation practices effectively. Also, the present disclosure enables farmers to make informed decisions about the types of crops they should cultivate. Hence the present disclosure has the potential to scale up and implement in any part of the world.

When forecasting ground water levels, it is essential to consider various components as they can significantly impact ground water dynamics and availability. Each component plays a specific role in influencing ground water levels, and incorporating these factors can lead to more accurate and comprehensive predictions. Here's a brief overview of the importance of each component:

**1. Weather conditions:** Weather, including precipitation and evapotranspiration rates, directly affects ground water recharge and discharge processes. Accurate weather data is crucial for estimating water inputs and outputs in the ground water system.

**2. Soil properties:** Soil characteristics, such as permeability, porosity, and water-holding capacity, determine how water moves through the soil and eventually reaches the ground water table. Understanding soil properties helps assess ground water recharge and flow rates.

**3. Agricultural data:** Agriculture is a significant consumer of ground water for irrigation purposes. Monitoring agricultural water use and crop water requirements is essential for understanding the demand-side influences on ground water levels.

**4. Population statistics:** Population growth affects the overall water demand, including both domestic and industrial uses. As the population increases, there may be higher water withdrawals from the ground water system, leading to potential depletion.

**5. Water resources information:** Information about surface water bodies, reservoirs, and other water resources connected to the ground water system can influence ground water levels through interactions and exchanges.

**6. Industrial details:** Industrial activities can lead to ground water contamination or increased water demand.

Understanding industrial water usage and potential sources of pollution is essential for assessing ground water sustainability.

**7. Drought records:** Past drought events can provide valuable insights into ground water system resilience and vulnerability during periods of low precipitation and increased water stress.

**8. Seismic data:** Seismic activities can affect ground water flow by altering subsurface fractures and permeability. Monitoring seismic data can help assess potential impacts on ground water levels.

**9. Surface deformation patterns:** Subsidence or uplift in the land surface can occur due to ground water extraction or recharge processes. Tracking surface deformation patterns can indicate changes in ground water levels.

**10. Future cropping pattern:** Changes in cropping patterns can affect water demand and irrigation practices, which, in turn, impact ground water usage and recharge.

**11. Forecasted weather conditions:** Future weather predictions help anticipate changes in precipitation patterns, temperature, and evapotranspiration rates, enabling better assessment of ground water recharge and discharge rates.

**12. Use of irrigation systems in the future:** Future changes in irrigation practices, such as the adoption of more efficient irrigation systems, can affect ground water demand and availability.

**13. Future population growth:** Anticipated population growth have direct implications for water demand and ground water usage, affecting the overall water balance.

Considering all these components in ground water forecasting allows for a more comprehensive understanding of the system dynamics and helps develop effective strategies for sustainable ground water management.

The systems and methods of the present disclosure first combines time-series archived remote sensing data with a wide array of past auxiliary datasets (which directly or indirectly influence ground water condition) specific to a given region for precise prediction of future ground water condition. These encompass diverse information such as weather conditions, soil properties, agricultural data, population statistics, water resources information, industrial details, drought records, seismic data, and surface deformation patterns among others. Importantly, the movement of ground water due to earthquakes in the given region is considered. Also, the systems and methods of the present disclosure consider different future scenarios which can be built on future cropping patterns, forecasted weather conditions, use of irrigation system in the future, and future population growth of the given region. This helps in providing specific recommendation of best practices based on scenarios-based analysis using the historical pattern and future predictions. For instance, in scenario 1, the prediction of future ground water levels could rely on a situation where the future conditions of all components (such as weather, soil, population, etc.) are assumed to be identical to those observed in the past. In scenario 2, specific components such as weather and population are anticipated to undergo changes (positive or negative) compared to their previous states whereas other components have the same future trend as observed in past. Similarly, various other scenarios can be generated.

For each parameter extraction, the data used are (1) the freely available satellite data from optical satellites such as Sentinel-2, Landsat, and SAR satellites such as Sentinel-1 and the like, (2) government statistics or (3) any other sources available. For ground water prediction, a comprehensive process-based model is developed where each parameter derived from the particular components (i.e. weather conditions, soil properties, agricultural data, population statistics, water resources information, industrial details, drought records, seismic data, and surface deformation patterns) is collectively used along with the future scenario information (future cropping pattern, forecasted weather conditions, use of irrigation system in future, and future population growth).

Hence in predicting the future ground water level, the present disclosure considers parameters such as weather conditions, soil properties, agriculture data, population data, water resources information, industry details, drought information, seismic data, and surface deformation trends over the years for the specific region.

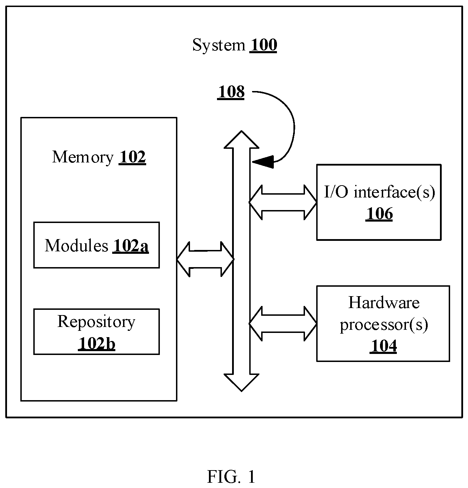

Referring now to the drawings, and more particularly to FIG. 1 through FIG. 3C, where similar reference characters denote corresponding features consistently throughout the figures, there are shown preferred embodiments, and these embodiments are described in the context of the following exemplary systems and/or methods.

FIG. 1 is an exemplary block diagram of a system 100 for ground water prediction using integration of satellite and auxiliary observations, in accordance with some embodiments of the present disclosure. In an embodiment, the system 100 includes or is otherwise in communication with one or more hardware processors 104, communication interface device(s) or input/output (I/O) interface(s) 106, and one or more data storage devices or memory 102 operatively coupled to the one or more hardware processors 104. The one or more hardware processors 104, the memory 102, and the I/O interface(s) 106 may be coupled to a system bus 108 or a similar mechanism.

The I/O interface(s) 106 may include a variety of software and hardware interfaces, for example, a web interface, a graphical user interface (GUI), and the like. The I/O interface(s) 106 may include a variety of software and hardware interfaces, for example, interfaces for peripheral device(s), such as a keyboard, a mouse, an external memory, a plurality of sensor devices, a printer and the like. Further, the I/O interface(s) 106 may enable the system 100 to communicate with other devices, such as web servers and external databases.

The I/O interface(s) 106 can facilitate multiple communications within a wide variety of networks and protocol types, including wired networks, for example, local area network (LAN), cable, etc., and wireless networks, such as Wireless LAN (WLAN), cellular, or satellite. For the purpose, the I/O interface(s) 106 may include one or more ports for connecting a number of computing systems with one another or to another server computer. Further, the I/O interface(s) 106 may include one or more ports for connecting a number of devices to one another or to another server.

The one or more hardware processors 104 may be implemented as one or more microprocessors, microcomputers, microcontrollers, digital signal processors, central processing units, state machines, logic circuitries, and/or any devices that manipulate signals based on operational instructions. Among other capabilities, the one or more hardware processors 104 are configured to fetch and execute computer-readable instructions stored in the memory 102. In the context of the present disclosure, the expressions 'processors' and 'hardware processors' may be used interchangeably. In an embodiment, the system 100 can be implemented in a variety of computing systems, such as laptop computers, portable computers, notebooks, hand-held devices, workstations, mainframe computers, servers, a network cloud and the like.

The memory 102 may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes. In an embodiment, the memory 102 includes a plurality of modules 102a and a repository 102b for storing data processed, received, and generated by one or more of the plurality of modules 102a. The plurality of modules 102a may include routines, programs, objects, components, data structures, and so on, which perform particular tasks or implement particular abstract data types.

The plurality of modules 102a may include programs or computer-readable instructions or coded instructions that supplement applications or functions performed by the system 100. The plurality of modules 102a may also be used as, signal processor(s), state machine(s), logic circuitries, and/or any other device or component that manipulates signals based on operational instructions. Further, the plurality of modules 102a can be used by hardware, by computer-readable instructions executed by the one or more hardware processors 104, or by a combination thereof. In an embodiment, the plurality of modules 102a can include various sub-modules (not shown in FIG. 1). Further, the memory 102 may include information pertaining to input(s)/output(s) of each step performed by the processor(s) 104 of the system 100 and methods of the present disclosure.

The repository 102b may include a database or a data engine. Further, the repository 102b amongst other things, may serve as a database or includes a plurality of databases for storing the data that is processed, received, or generated as a result of the execution of the plurality of modules 102a. Although the repository 102b is shown internal to the system 100, it is noted that, in alternate embodiments, the repository 102b can also be implemented external to the system 100, where the repository 102b may be stored within an external database (not shown in FIG. 1) communicatively coupled to the system 100. The data contained within such external database may be periodically updated. For example, data may be added into the external database and/or existing data may be modified and/or non-useful data may be deleted from the external database. In one example, the data may be stored in an external system, such as a Lightweight Directory Access Protocol (LDAP) directory and a Relational Database Management System (RDBMS). In another embodiment, the data stored in the repository 102b may be distributed between the system 100 and the external database.

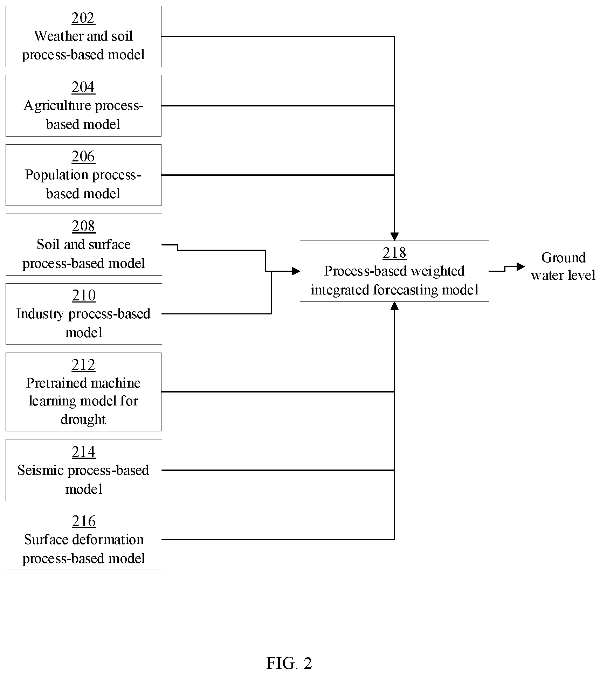

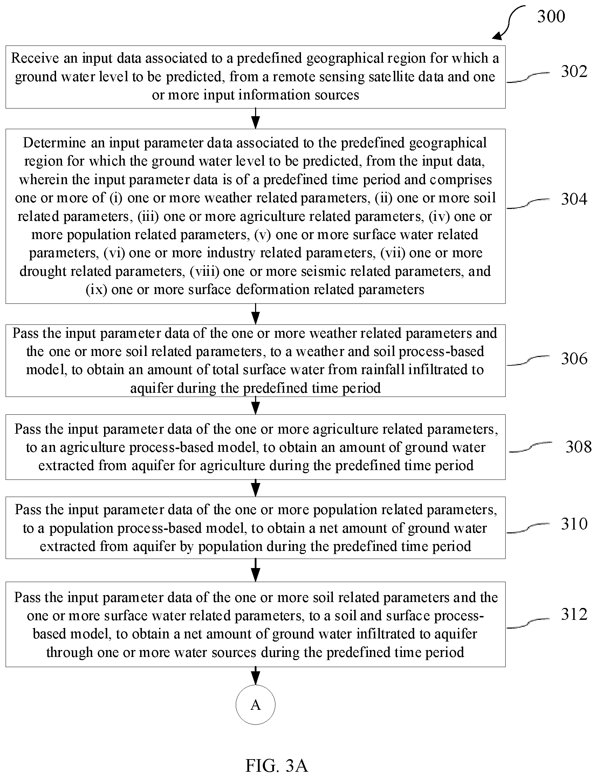

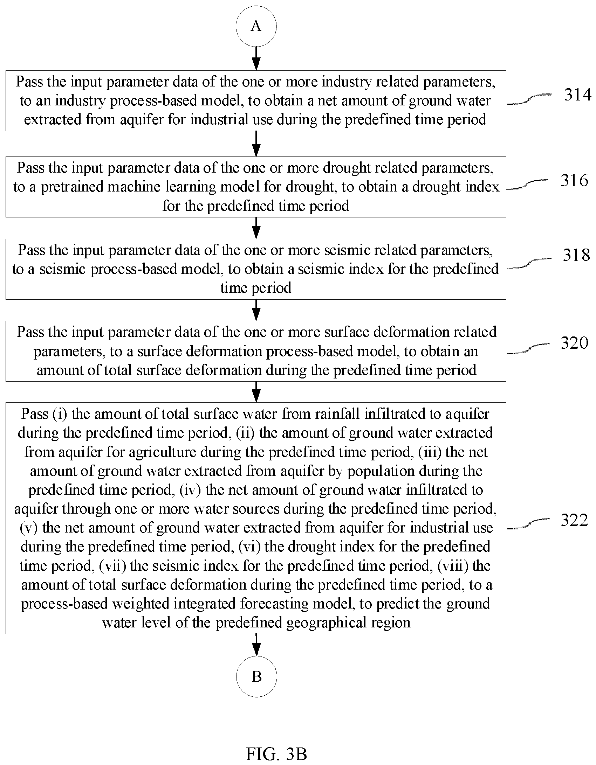

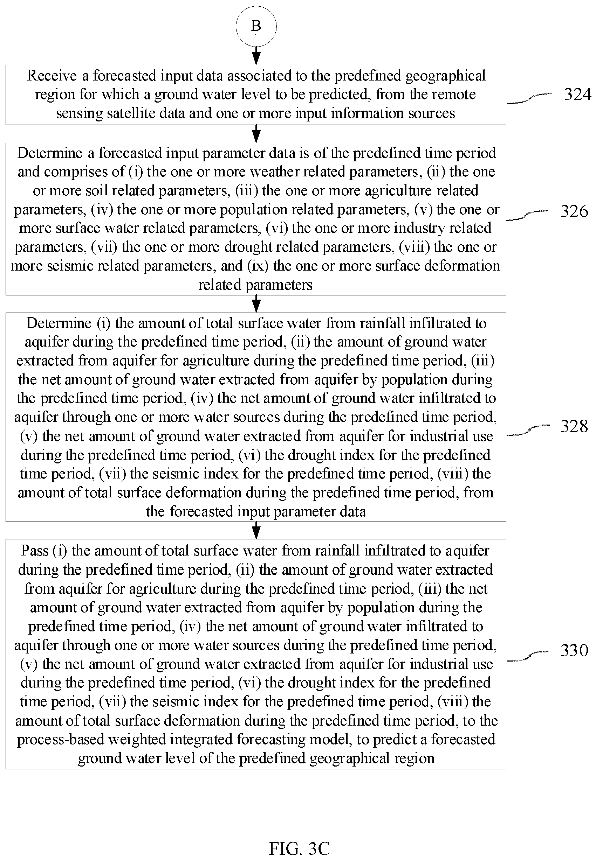

Referring collectively to FIG. 2 and FIGS. 3A through 3C, components and functionalities of the system 100 are described in accordance with an example embodiment of the present disclosure. For example, FIG. 2 is an exemplary block diagram illustrating the plurality of modules 102a of the system 100 of FIG. 1, for ground water prediction using integration of satellite and auxiliary observations, in accordance with some embodiments of the present disclosure. In an embodiment, the plurality of modules 102a include a weather and soil process-based model 202, an agriculture process-based model 204, a population process-based model 206, a soil and surface process-based model 208, an industry process-based model 210, a pretrained machine learning model for drought 212, a seismic process-based model 214, a surface deformation process-based model 216, and a process-based weighted integrated forecasting model 218.

For example, FIGS. 3A through 3C illustrate exemplary flow diagrams of a processor-implemented method 300 for ground water prediction using integration of satellite and auxiliary observations, using the system 100 of FIG. 1, in accordance with some embodiments of the present disclosure. Although steps of method 300 including process steps, method steps, techniques or the like may be described in a sequential order, such processes, methods, and techniques may be configured to work in alternate orders. In other words, any sequence or order of steps that may be described does not necessarily indicate a requirement that the steps be performed in that order. The steps of processes described herein may be performed in any practical order. Further, some steps may be performed simultaneously, or some steps may be performed alone or independently.

At step 302 of the method 300, the one or more hardware processors 104 of the system 100 are configured to receive an input data associated to a predefined geographical region for which a ground water level is to be predicted. In an embodiment, the input data associated to the predefined geographical region is received from a remote sensing satellite data and one or more input information sources. In an embodiment, the remote sensing satellite data is obtained from satellite centers maintained by various public and private bodies or entities. In an embodiment, the one or more input information sources include but are not limited to databases of weather, soil, agriculture, population, surface water, industry and drought data maintained by various public and private bodies or entities.

At step 304 of the method 300, the one or more hardware processors 104 of the system 100 are configured to determine an input parameter data associated to the predefined geographical region for which the ground water level is to be predicted. The input data associated to predefined geographical region received at step 302 of the method 300 is utilized to determine the input parameter data. In an embodiment, the input parameter data includes one or more of (i) one or more weather related parameters, (ii) one or more soil related parameters, (iii) one or more agriculture related parameters, (iv) one or more population related parameters, (v) one or more surface water related parameters, (vi) one or more industry related parameters, (vii) one or more drought related parameters, (viii) one or more seismic related parameters, and (ix) one or more surface deformation related parameters.

In an embodiment, the input parameter data is of a predefined time period having a start date (t1) and end date (t2), and the data of each of the parameters is of a predefined frequency such as daily, weekly, monthly, and so on.

In an embodiment, the one or more weather related parameters includes (i) a daily rainfall, (ii) a daily land surface temperature, and (iii) a daily evapotranspiration rate. The daily rainfall is defined as an amount of precipitation, in the form of rain (water from clouds), that descends onto the surface of Earth each day. The daily land surface temperature is a measurement of how hot the land is during the rainfall each day. The daily evapotranspiration rate is defined as a sum of all processes by which water moves from the land surface to the atmosphere via evaporation and transpiration.

In an embodiment, the daily rainfall data ($R_{t1\text{-}t2}$) is determined using a Precipitation Estimation from Remotely Sensed Information using Artificial Neural Networks-Cloud Classification System (PERSIANN-CCS) tool from the rain data. In an embodiment, the daily land surface temperature data ($LST_{t1\text{-}t2}$) is determined from a Moderate Resolution Imaging Spectroradiometer (MODIS), wherein the ($LST_{t1\text{-}t2}$) is available with spatial resolution of 1 km provided by MODIS. In an embodiment, the daily evapotranspiration rate data ($E_{t1\text{-}t2}$) is determined using a United States Geological Survey (USGS) Famine Early Warning Systems Network (FEWS NET) data portal.

In an embodiment, the one or more soil related parameters include (i) a soil type, (ii) soil compaction index (SCI), (iii) a soil saturation level (SSL), and (iv) a soil infiltration capacity. The soil type is defined as the type of soil present in the predefined geographical region. The soil can be classified into three primary types based on its texture - sand, silt, and clay. However, the percentage of these can vary, resulting in more compound types of soil such as loamy sand, sandy clay, silty clay, and so on. The soil compaction index (SCI) is defined as a measure of compactness in soil in terms of a density and a pore space. The soil saturation level (SSL) is the threshold at which all the pores (empty spaces between the solid soil particles) are filled with water. The soil infiltration capacity is the maximum rate at which the soil is capable of absorbing water in a given condition.

In an embodiment, the information on spatially distributed soil type (ST) is determined from a machine-learning or a deep-learning based image texture analysis model where the Sentinel-1 derived radar backscatter response in vertical-vertical (VV) and vertical-horizontal (VH) polarization along with the local incidence angle (LIA) is used. Radar backscatter response in VV and VH polarization is denoted as $\sigma_{VV}^0$ and $\sigma_{VH}^0$, respectively. For each *ST*, radar backscatter response in the polarization is different. Model may take the following form to determine the spatially distributed soil type (ST):

$$ST = f(\sigma_{VV}^0, \sigma_{VH}^0, LIA) \tag{1}$$

In an embodiment, the spatially distributed soil compaction index (*SCI*) is determined from the machine-learning or deep-learning based approach. The *SCI* is defines as a function of *ST, SoMo$_{t1\text{-}t2}$, LST$_{t1\text{-}t2}$*. It is important to highlight that determining the *SCI* using remote sensing involves identifying indirect indicators or proxies that can provide information about the compactness of the soil without directly measuring it. The *SCI* ranges from 0 to 1, where 0 represents low compaction whereas 1 represent very high compaction. Model may take the following form to determine the spatially distributed soil compaction index (*SCI*):

$$SCI = f(ST, SoMo_{t1-t2}, LST_{t1-t2}) \tag{2}$$

wherein, *SoMo$_{t1\text{-}t2}$* can be estimated using Dubois and Topp's coupled model, where Sentinel-1 derived $\sigma_{VV}^0$ is used as an input parameter.

In an embodiment, the spatially distributed soil saturation level (*SSL*) is determined from the machine-learning or the deep-learning based approach. The *SSL* can be defined as a function of *ST* and *SCI*. Model may take the following form to determine the spatially distributed soil saturation level (*SSL*):

$$SSL = f(ST, SCI) \tag{3}$$

In an embodiment, the spatially distributed soil infiltration capacity (*SIC*) is determined from the machine-learning or deep-learning based approach. The soil infiltration capacity (*SIC*) can be define as a function of *ST, SCI* and *SSL* Model may take the following form:

$$SIC = f(ST, SCI, SSL) \tag{4}$$

In an embodiment, the one or more agriculture related parameters include (i) a total agriculture area, (ii) a type of crop grown in each season, and (iii) a crop grown area in each season. The total agriculture area is an area of agricultural land that is typically devoted to agriculture in the predefined geographical region of interest. The type of crop grown in each season provides details about which crop grown in Kharif as well as Rabi season in the predefined geographical region of interest. The crop grown area in each season is the estimated season-wise and crop-wise cultivation area.

The agriculture sector is heavily dependent upon the ground water available in the region. Each crop needs a particular amount of water during the complete crop cycle. Since, this component only consider impact of agriculture, the total agriculture area ($TAA_{t1-t2}$) in the given region of interest needs to be determined. In an embodiment, the total agriculture area ($TAA_{t1-t2}$) is a function of spatially distributed Normalized Difference Vegetation Index (*NDVI*) derived from Sentinel-2, and radar backscatter response ($\sigma_{VV}^0$ and $\sigma_{VH}^0$) obtained from Sentinel-1. The *NDVI*, $\sigma_{VV}^0$ and $\sigma_{VH}^0$ are obtained for two different dates- Date 1 and Date 2. Date 1 represents time when region is completely empty (bare soil) whereas Date 2 represents time of peak vegetation. The values of all the indices at the pixel level are altered due to the cultivation of crops on agricultural land. By comparing the differences in pixel-level values, the total agriculture area ($TAA_{t1-t2}$) is determined using a following set of equations:

$$NDVI(diff) = NDVI(date\ 1) - NDVI(date\ 2) \tag{5}$$

$$\sigma_{VV}^0(diff) = \sigma_{VV}^0(date\ 1) - \sigma_{VV}^0(date\ 2) \tag{6}$$

$$\sigma_{VH}^0(diff) = \sigma_{VH}^0(date\ 1) - \sigma_{VH}^0(date\ 2) \tag{7}$$

$$TAA_{t1-t2} = f(NDVI(diff), \sigma_{VV}^0(diff), \sigma_{VH}^0(diff)) \tag{8}$$

A machine-learning or deep learning crop classification model is developed based on *NDVI* and radar back-scatter response ($\sigma_{VV}^0$ and $\sigma_{VH}^0$) to determine the type of crop grown in each season ($CType_{t1-t2}$). The basic idea is that each crop is giving different signature in *NDVI*, ($\sigma_{VV}^0$ and $\sigma_{VH}^0$). Therefore, collective utilization of these indices helps to identify which crop (e.g. rice, wheat, corn etc.) is grown in the region of interest. The type of crop grown in each season ($CType_{t1-t2}$) is defined as the function of *NDVI*, $\sigma_{VV}^0$ and $\sigma_{VH}^0$), and is mathematically represented as a below equation:

$$CType_{t1-t2} = f(NDVI, \sigma_{VV}^0 \text{ and } \sigma_{VH}^0) \tag{8}$$

Later, the crop grown area in each season ($CGA_{t1-t2}$) is determined for each crop type in the given season. The $CGA_{t1-t2}$ is determined by using pixel-level $CType_{t1-t2}$ information and is defined as below equation:

$$CGA_{t1-t2} = f(CType_{t1-t2}) \tag{9}$$

In an embodiment, the one or more population related parameters include (i) a year-wise population amount, (ii) a population growth rate, (iii) a year-wise number of residential establishments, (iv) a year-wise number of residential establishments with ground water recharge facilities, and (v) a year-wise area of residential establishments with ground water recharge facilities.

It is well-known that huge amounts of water have been utilized by the population for domestic purposes. Therefore, to forecast ground water condition, it is important to know how much the year-wise population in the given region between time $t1$ and $t2$. Also, it is important to know how much amount of water is given back to the aquifer through rainwater harvesting facilities installed on each house present in the region of interest.

In an embodiment, the year-wise population amount data ($P_{t1\text{-}t2}$) is determined using population data obtained from the government entity sources. As the population increases, so does the demand for water. More people mean more water is required for drinking, sanitation, agriculture, industry, and other activities. This increased demand puts pressure on existing water sources and leads to water scarcity in some regions.

In an embodiment, the yearly population growth rate data ($PGR_{t1\text{-}t2}$) is determined from the year-wise population amount data ($P_{t1\text{-}t2}$) collected between $t1$ and $t2$. Because of the positive growth rate of population, there is a greater likelihood of over-pumping and depleting ground water reserves faster than they can naturally recharge. This can lead to long-term water quality degradation and land subsidence.

$$PGR_{t1-t2} = f(P_{t1-t2}) \tag{10}$$

In an embodiment, the Geo-tagged year-wise number of residential establishments ($PE_{t1\text{-}t2}$) is determined as a function of Normalized Difference Build-up Index (*NDBI*), ( $\sigma_{VV}^0$ and $\sigma_{VH}^0$ ). *NDBI* highlights urban areas and can be derived from Sentinel-2 data. Similarly, $\sigma_{VV}^0$ and $\sigma_{VH}^0$ estimated from Sentinel-1 give specific signatures for build-up area. This information helps to estimate the average water consumption by the individual house and building.

$$PE_{t1-t2} = f(NDBI, \sigma_{VV}^0, \sigma_{VH}^0) \tag{11}$$

In an embodiment, the Geo-tagged year-wise number of residential establishments with ground water recharge facilities data ($PEW_{t1\text{-}t2}$) is determined from the data sources collected by the government. This information helps to identify which house (geo-tagged location) in the region of interest is equipped with artificial ground water recharge facility every year between time t1 and t2.

In an embodiment, the year-wise area of residential establishments with ground water recharge facilities ($APEW_{t1\text{-}t2}$) is determined from the Geo-tagged year-wise number of residential establishments with ground water recharge facilities data ($PEW_{t1\text{-}t2}$). Next, based on *NDBI,* $\sigma_{VV}^0, \sigma_{VH}^0$ area of individual house and building equipped with ground water recharge facility is estimated. Individual houses and building areas are also helpful in determining the amount of water going back to the aquifer from that particular house.

$$APEW_{t1-t2} = f(PEW_{t1-t2}, NDBI, \sigma_{VV}^0, \sigma_{VH}^0) \tag{12}$$

In an embodiment, the one or more surface water related parameters include (i) a total area of one or more water reserve sources, and (ii) a total water holding capacity of the one or more water reserve sources. Water infiltration from lakes, ponds and rivers to aquifers refers to the process by which water from surface water bodies, such as lakes, ponds and rivers, seeps through the soil and permeable rock layers to recharge the aquifers. This natural process is a vital component of the water cycle and plays a significant role in maintaining ground water levels and sustaining the overall water supply.

In an embodiment, the one or more water reserve sources includes but are not limited to lakes, ponds, dams, and rivers present in the predefined geographical region. Hence the total area of the one or more water reserve sources is defined as a combined area of the one or more water reserve sources present in the predefined geographical region. Similarly, the total water holding capacity of the one or more water reserve sources is defined as a combined capacity of the one or more water reserve sources present in the predefined geographical region. In an embodiment, the total area of one or more water reserve sources ($TAW_{t1\text{-}t2}$), and the total water holding capacity of the one or more water reserve sources ($TAWHC_{t1\text{-}t2}$), are determined from the Normalized Difference Water Index (*NDWI*), $\sigma_{VV}^0, \sigma_{VH}^0$ , and local incidence angle (*LIA*).

The *NDWI* highlights open water features in a satellite image, allowing a water body to stand out against the soil and vegetation. It can be obtained from the band combination of Sentinel-2 satellite data. The $\sigma_{VV}^0, \sigma_{VH}^0$ response of the one or more water reserve sources is influenced by its surface conditions, such as the presence of waves, ripples, or smoothness. Calm water surfaces tend to produce lower backscatter values, while rougher surfaces with waves or other disturbances can lead to increased backscatter. The response also depends upon the radar frequency and local incidence angle (*LIA*).

In an embodiment, the one or more industry related parameters include (i) a year-wise number of industry establishments, (ii) year-wise type of industry establishments, (iii) a year-wise total amount of ground water utilized by industry establishments, (iv) a year-wise number of industry establishments with ground water recharge facilities, (v) a year-wise area of permanent industry establishments with ground water recharge facilities, and (vi) a year-wise total amount of rain water given to aquifer by industry establishments.

Industries that heavily rely on water for activities such as manufacturing processes, cooling, cleaning, and other purposes can contribute significantly to ground water extraction in certain regions. It's important to note that the impact of industrial ground water extraction on local water resources can be significant, especially in regions with water scarcity or over exploited aquifers. The year-wise number of industry establishments ($NI_{t1-t2}$) with geo-tagged location, the year-wise type of industry establishments ($TI_{t1-t2}$), the year-wise number of industry establishments with ground water recharge facilities ($IWR_{t1-t2}$), and the year-wise area of permanent industry establishments with ground water recharge facilities ($IAWR_{t1-t2}$), are utilized in order to determine the impact of industrial ground water extraction.

In an embodiment, $NI_{t1-t2}$, $TI_{t1-t2}$, and $IWR_{t1-t2}$ are obtained from government records. $IAWR_{t1-t2}$ is obtained from the geo-tagged $IWR_{t1-t2}$. $NI_{t1-t2}$ and $TI_{t1-t2}$ is combinedly used to determine the year-wise total amount of ground water utilized by industry establishments ($TAGW_{t1-t2}$)

$$TAGW_{t1-t2} = f(NI_{t1-t2}, TI_{t1-t2}) \tag{13}$$

In an embodiment, the year-wise total amount of rainwater given to aquifer by industry establishments ($TAGWA_{t1-t2}$) is computing using below relation:

$$TAGWA_{t1-t2} = f(IWR_{t1-t2}, IAWR_{t1-t2},$$
$$DR_{t1-t2}, DE_{t1-t2}, ST, SCI, SSL, SIC) \tag{14}$$

In an embodiment, the one or more drought related parameters include (i) a season-wise spatially distributed drought affected area, and (ii) a season-wise spatially distributed drought intensity. The season-wise spatially distributed drought affected area ($DAA_{t1-t2}$) refers to the predefined geographic region or location that is experiencing the adverse impacts of the drought conditions. The season-wise spatially distributed drought intensity ($DIn_{t1-t2}$) refers to the severity or degree of dryness and water scarcity experienced during a drought event.

In an embodiment, the season-wise spatially distributed drought affected area ($DAA_{t1-t2}$) is determined using the machine-learning or the deep learning based model where long-term spatially distributed soil moisture ($SoMo_{t1-t2}$) information, NDVI time-series ($NDVI_{t1-t2}$) and other input parameter i.e. daily land surface temperature ($DLST_{t1-t2}$) of weather component are used as features.

$$DAA_{t1-t2} = f(SoMo_{t1-t2}, NDVI_{t1-t2}, DLST_{t1-t2}) \tag{15}$$

Wherein $SoMo_{t1-t2}$ is estimated using Dubois and Topp's coupled model, where Sentinel-1 derived $\sigma_{VV}^0$ is used as an input parameter. $NDVI_{t1-t2}$ is derived from the Sentinel-2 satellite data. The daily land surface temperature ($DLST_{t1-t2}$) belongs to the weather component and is obtained from remote sensing data.

In an embodiment, the season-wise spatially distributed drought intensity ($DIn_{t1-t2}$) is determined using the machine-learning or the deep learning based model where long-term spatially distributed soil moisture ($SoMo_{t1-t2}$) information, NDVI time-series ($NDVI_{t1-t2}$) and other multiple input parameters i.e. the daily rainfall data ($DR_{t1-t2}$), the daily land surface temperature ($DLST_{t1-t2}$) and daily evapotranspiration ($DE_{t1-t2}$) of the weather are used as features.

$$DIn_{t1-t2} = f(SoMo_{t1-t2}, NDVI_{t1-t2}, DR_{t1-t2}, DLST_{t1-t2}, DE_{t1-t2}) \tag{16}$$

In an embodiment, the one or more seismic related parameters include (i) a region of interest (RoI) seismic zone type, and (ii) a year-wise seismic magnitude. Seismic activities, such as earthquakes and ground vibrations, can potentially impact underground water resources in various ways. Some of the ways seismic activities can contribute to underground water depletion are:

- Seismic activities can alter the storage capacity of aquifers and affect the recharge rates. The ground movements associated with earthquakes can compress or expand the subsurface rock formations, affecting the available pore space for storing water. This can lead to changes in the aquifer's ability to store and replenish ground water.
- Seismic activities can cause the compaction of aquifer materials due to increased stress and shaking. This compaction can reduce the overall porosity of the aquifer, leading to a permanent loss of water storage capacity.
- Seismic activities can cause faulting, which can offset aquifer layers and change the ground water flow patterns.

The region of interest (RoI) seismic zone type ($SZ$) refers to a geographic region that is susceptible to experiencing seismic activity, particularly earthquakes. The year-wise seismic magnitude ($SM_{t1-t2}$) is a measure of the size or energy release of an earthquake. In an embodiment, the region of interest (RoI) seismic zone type (SZ) and the year-wise seismic magnitude ($SM_{t1-t2}$) are determined from data obtained from government records or other input sources.

In an embodiment, the one or more surface deformation related parameters include a year-wise amount of land surface deformation. Land surface deformation is indeed served as a proxy or indicator of ground water depletion in certain regions. This subsidence is a clear indication of ground water depletion, and it can be monitored and studied using different techniques, such as Interferometric Synthetic Aperture Radar (InSAR) and GPS measurements. In an embodiment, the year-wise amount of land surface deformation i.e. subsidence or uplifting ($LS_{t1-t2}$) happened between time t1 and t2 over the given region is determined using the small baseline subset (SBAS) InSAR technique.

The processing steps for determining the year-wise amount of land surface deformation ($LS_{t1-t2}$) using the SBAS InSAR typically include:

- Data Acquisition: Acquire a series of Sentinel-1 SAR images covering the area of interest. These images should be obtained with a short revisit time to capture the temporal changes in the land surface.
- Pre-processing of SAR Data: Pre-process the SAR data to correct for artifacts and radiometric distortions. This step includes radiometric calibration, removal of thermal noise, speckle filtering, and geometric correction to ensure the data are in the appropriate format for InSAR processing.
- Interferogram Generation: Perform interferometric processing to generate a series of interferograms. An interferogram is a combination of two SAR images taken at different times, and it represents the phase difference between the two acquisitions.

- SBAS Processing: Implement the SBAS algorithm, which stands for Small Baseline Subset. SBAS is a method that selects small baseline interferograms and groups them together to create a network of interferograms with minimal temporal and spatial decorrelation. This step is crucial for monitoring large areas with significant subsidence.
- Phase Unwrapping: During interferometric processing, the phase values obtained may be wrapped between $-\pi$ and $+\pi$ due to the inherent $2\pi$ ambiguity. Phase unwrapping is necessary to convert the wrapped phase into continuous values, allowing accurate measurements of the deformation.
- Phase to Displacement Conversion: Convert the unwrapped phase values into displacement values in the line-of-sight direction (LOS). This step involves using the radar wavelength and satellite geometry to convert the phase measurements into vertical deformation values (subsidence or uplift) in millimeters.
- Temporal Coherence Thresholding: Apply a temporal coherence threshold to filter out areas with low coherence, which can occur due to vegetation, decorrelation, or atmospheric effects. Low coherence areas may lead to inaccurate deformation measurements.
- Time-Series Analysis: Create a time-series of the estimated land subsidence by combining the deformation information (i.e. $SD_{t1-t2}$) from multiple interferograms over time. This provides a comprehensive view of the land surface behavior and allows for the identification of areas with continuous subsidence trends.

At step 306 of the method 300, the one or more hardware processors 104 of the system 100 are configured to pass the input parameter data of the one or more weather related parameters and the one or more soil related parameters determine at step 304 of the method 300, to a weather and soil process-based model 202, to obtain an amount of total surface water from rainfall infiltrated to aquifer ($QR_{t1-t2}$) during the predefined time period $t1$ and $t2$.

In an embodiment, the weather and soil process-based model 202 is one of a pretrained ML model or a process-based model that predicts the amount of total surface water from rainfall infiltrated to aquifer ($QR_{t1-t2}$) during the predefined time period $t1$ and $t2$. In an embodiment, the pretrained ML model is obtained by training a suitable ML model such as a classification model or a regression model with a suitable training data of the one or more weather related parameters and the one or more soil related parameters. In an embodiment, the process-based model is obtained by using relationships that are described in terms of explicitly stated processes or mechanisms based on established scientific understanding.

A model equation of the weather and soil process-based model 202, to obtain the amount of total surface water from rainfall infiltrated to aquifer ($QR_{t1-t2}$) during the predefined time period t1 and t2, is mathematically represented as:

$$QR_{t1-t2} = f(R_{t1-t2}, LST_{t1-t2}, E_{t1-t2}, ST, SCI, SSL, SIC) \qquad (17)$$

At step 308 of the method 300, the one or more hardware processors 104 of the system 100 are configured to pass the input parameter data of the one or more agriculture related parameters, to an agriculture process-based model 204, to obtain an amount of ground water extracted from aquifer for agriculture ($QE$ - $A_{t1-t2}$) during the predefined time period $t1$ and $t2$.

In an embodiment, the agriculture process-based model 204 is one of the pretrained ML model or the process-based model that is made to predict the amount of ground water extracted from aquifer for agriculture ($QE$ - $A_{t1-t2}$) during the predefined time period $t1$ and $t2$. In an embodiment, the pretrained ML model is obtained by training a suitable ML model such as a classification model or a regression model with a suitable training data of the one or more agriculture related parameters. In an embodiment, the process-based model is obtained by using relationships that are described in terms of explicitly stated processes or mechanisms based on established scientific understanding.

The model equation of the agriculture process-based model 204, to obtain the amount of ground water extracted from aquifer for agriculture ($QE$ - $A_{t1-t2}$) during the predefined time period $t1$ and $t2$, is mathematically represented as:

$$QE - A_{t1-t2} = f(TAA_{t1-t2}, CType_{t1-t2}, CGA_{t1-t2}) \qquad (18)$$

At step 310 of the method 300, the one or more hardware processors 104 of the system 100 are configured to pass the input parameter data of the one or more population related parameters, to a population process-based model 206, to obtain a net amount of ground water extracted from aquifer by population ($QE$ - $P_{t1-t2}$) during the predefined time period $t1$ and $t2$.

In an embodiment, the population process-based model 206 is one of the pretrained ML model or the process-based model that is made to predict the net amount of ground water extracted from aquifer by population ($QE$ - $P_{t1-t2}$) during the predefined time period $t1$ and $t2$. In an embodiment, the pretrained ML model is obtained by training a suitable ML model such as a classification model or a regression model with a suitable training data of the one or more population related parameters. In an embodiment, the process-based model is obtained by using relationships that are described in terms of explicitly stated processes or mechanisms based on established scientific understanding.

The model equation of the population process-based model 206, to obtain the net amount of ground water extracted from aquifer by population ($QE$ - $P_{t1-t2}$) during the predefined time period $t1$ and $t2$, is mathematically represented as:

$$QE - P_{t1-t2} = f(P_{t1-t2}, PGR_{t1-t2}, PE_{t1-t2}, PEW_{t1-t2}, APEW_{t1-t2}) \qquad (19)$$

At step 312 of the method 300, the one or more hardware processors 104 of the system 100 are configured to pass the input parameter data of the one or more soil related parameters and the one or more surface water related parameters, to a soil and surface process-based model 208, to obtain a net amount of ground water infiltrated to aquifer through one or more water sources ($QR$ - $WR_{t1-t2}$) during the predefined time period $t1$ and $t2$.

In an embodiment, the soil and surface process-based model 208 is one of the pretrained ML model or the process-based model that is made to predict the net amount of ground water infiltrated to aquifer through one or more water sources ($QR$ - $WR_{t1-t2}$) during the predefined time period $t1$ and $t2$. In an embodiment, the pretrained ML model is obtained by training a suitable ML model such as a classification model or a regression model with a suitable training data of the one or more soil related parameters and the one or more surface water related parameters. In an embodiment, the process-based model is obtained by using relationships that are described in terms of explicitly stated processes or mechanisms based on established scientific understanding.

The model equation of the soil and surface process-based model 208 to predict the net amount of ground water infiltrated to aquifer through one or more water sources ($QR$ - $WR_{t1-t2}$) during the predefined time period $t1$ and $t2$, is mathematically represented as:

$$QR - WR_{t1-t2} = f(TAW_{t1-t2}, TAWHC_{t1-t2}, ST, SCI, SSL, SIC) \qquad (20)$$

At step 314 of the method 300, the one or more hardware processors 104 of the system 100 are configured to pass the input parameter data of the one or more industry related parameters, to an industry process-based model 210, to obtain a net amount of ground water extracted from aquifer for industrial use ($QE$ - $I_{t1-t2}$) during the predefined time period $t1$ and $t2$.

In an embodiment, the industry process-based model 210 is one of the pretrained ML model or the process-based model that is made to predict the net amount of ground water extracted from aquifer for industrial use ($QE$ - $I_{t1-t2}$)

during the predefined time period $t1$ and $t2$. In an embodiment, the pretrained ML model is obtained by training a suitable ML model such as a classification model or a regression model with a suitable training data of the one or more industry related parameters. In an embodiment, the process-based model is obtained by using relationships that are described in terms of explicitly stated processes or mechanisms based on established scientific understanding.

The model equation of the industry process-based model 210 to predict the net amount of ground water extracted from aquifer for industrial use ($QE$ - $I_{t1\text{-}t2}$) during the predefined time period $t1$ and $t2$, is mathematically represented as:

$$QE - I_{t1-t2} = TAGW_{t1-t2} - TAGWA_{t1-t2} \qquad (21)$$

At step 316 of the method 300, the one or more hardware processors 104 of the system 100 are configured to pass the input parameter data of the one or more drought related parameters, to a pretrained machine learning model for drought 212, to obtain a drought index ($DI_{t1\text{-}t2}$) for the time period $t1$ and $t2$. The drought index ($DI_{t1\text{-}t2}$) value is typically a single number, which ranges 0 to 1, where o indicates low drought-prone area in the predefined geographical region and 1 indicates high drought-prone area in the predefined geographical region.

In an embodiment, the pretrained machine learning model for drought 212, is obtained by training a suitable ML model such as a classification model or a regression model with a suitable training data of the one or more drought related parameters.

The model equation of the pretrained machine learning model for drought 212, to obtain a drought index ($DI_{t1\text{-}t2}$) for the time period $t1$ and $t2$, is mathematically represented as:

$$DI_{t1-t2} = f(DAA_{t1-t2}, DIn_{t1-t2}) \qquad (22)$$

At step 318 of the method 300, the one or more hardware processors 104 of the system 100 are configured to pass the input parameter data of the one or more seismic related parameters, to a seismic process-based model 214, to obtain a seismic index ($SI_{t1\text{-}t2}$) for the time period $t1$ and $t2$. The seismic index ($SI_{t1\text{-}t2}$) value is typically a single number, which ranges 0 to 1, where o indicates low seismic -prone area in the predefined geographical region and 1 indicates high seismic -prone area in the predefined geographical region.

In an embodiment, the seismic process-based model 214 is one of the pretrained ML model or the process-based model that is made to predict the seismic index ($SI_{t1\text{-}t2}$) for the time period $t1$ and $t2$. In an embodiment, the pretrained ML model is obtained by training a suitable ML model such as a classification model or a regression model with a suitable training data of the one or more seismic related parameters. In an embodiment, the process-based model is obtained by using relationships that are described in terms of explicitly stated processes or mechanisms based on established scientific understanding.

The model equation of the seismic process-based model 214 to predict the seismic index ($SI_{t1\text{-}t2}$) for the time period $t1$ and $t2$, is mathematically represented as:

$$SI_{t1-t2} = f(SZ, SM_{t1-t2}) \qquad (23)$$

At step 320 of the method 300, the one or more hardware processors 104 of the system 100 are configured to pass the input parameter data of the one or more surface deformation related parameters, to a surface deformation process-based model 216, to obtain an amount of total surface deformation ($SD_{t1\text{-}t2}$) for the time period $t1$ and $t2$.

In an embodiment, the surface deformation process-based model 216 is one of the pretrained ML model or the process-based model that is made to predict the amount of total surface deformation ($SD_{t1\text{-}t2}$). In an embodiment, the pretrained ML model is obtained by training a suitable ML model such as a classification model or a regression model with a suitable training data of the one or more surface deformation related parameters. In an embodiment, the process-based model is obtained by using relationships that are described in terms of explicitly stated processes or mechanisms based on established scientific understanding.

The model equation of the surface deformation process-based model 216 to predict the amount of total surface deformation ($SD_{t1\text{-}t2}$), is mathematically represented as:

$$SD_{t1-t2} = \sum LS_{t1-t2} \qquad (24)$$

At step 322 of the method 300, the one or more hardware processors 104 of the system 100 are configured to pass the (i) the amount of total surface water from rainfall infiltrated to aquifer ($QR_{t1\text{-}t2}$) during the predefined time period $t1$ and $t2$, (ii) the amount of ground water extracted from aquifer for agriculture ($QE$ - $A_{t1\text{-}t2}$) during the predefined time period $t1$ and $t2$, (iii) the net amount of ground water extracted from aquifer by population ($QE$ - $P_{t1\text{-}t2}$) during the predefined time period $t1$ and $t2$, (iv) the net amount of ground water infiltrated to aquifer through one or more water sources ($QR$ - $WR_{t1-t2}$) during the predefined time period $t1$ and $t2$, (v) the net amount of ground water extracted from aquifer for industrial use ($QE$ - $I_{t1-t2}$ ) during the predefined time period $t1$ and $t2$, (vi) the drought index ($DI_{t1-t2}$ ) for the time period $t1$ and $t2$, (vii) the seismic index ($SI_{t1-t2}$) for the time period $t1$ and $t2$, (viii) the amount of total surface deformation ($SD_{t1-t2}$ ) for the time period $t1$ and $t2$, to a process-based weighted integrated forecasting model 218, to predict the ground water level of the predefined geographical region.

In an embodiment, the process-based weighted integrated forecasting model 218 is one of the pretrained ML model or the process-based model that is made to predict the ground water level ($GWL_{t1-t2}$ ) of the predefined geographical region for the time period $t1$ and $t2$. In an embodiment, the pretrained ML model is obtained by training a suitable ML model such as a classification model or a regression model with a suitable training data of (i) the amount of total surface water from rainfall infiltrated to aquifer ($QR_{t1-t2}$ ), (ii) the amount of ground water extracted from aquifer for agriculture ($QE$ - $A_{t1-t2}$), (iii) the net amount of ground water extracted from aquifer by population ($QE$ - $P_{t1-t2}$), (iv) the net amount of ground water infiltrated to aquifer through one or more water sources ($QR$ - $WR_{t1-t2}$), (v) the net amount of ground water extracted from aquifer for industrial use ($QE$ - $I_{t1-t2}$), (vi) the drought index ($DI_{t1-t2}$ ), (vii) the seismic index ($SI_{t1-t2}$ ), (viii) the amount of total surface deformation ($SD_{t1-t2}$ ).

In an embodiment, the process-based model is obtained by using relationships that are described in terms of explicitly stated processes or mechanisms based on established scientific understanding.

The model equation of the process-based weighted integrated forecasting model 218 to predict the ground water level ($GWL_{t1-t2}$ ) of the predefined geographical region for the time period t1 and t2, is mathematically represented as:

$$GWL_{t1-t2} = f_{weighted}(QR_{t1-t2}, QE - A_{t1-t2}, QE - P_{t1-t2}, QR - WR_{t1-t2}, QE - I_{t1-t2}, DI_{t1-t2}, SD_{t1-t2}) \qquad (25)$$

Further, the process-based weighted integrated forecasting model 218 employs weights for each of the (i) the amount of total surface water from rainfall infiltrated to aquifer ($QR_{t1-t2}$), (ii) the amount of ground water extracted from aquifer for agriculture ($QE$ - $A_{t1-t2}$), (iii) the net amount of ground water extracted from aquifer by population ($QE$ - $P_{t1-t2}$), (iv) the net amount of ground water infiltrated to aquifer through one or more water sources ($QR$ - $WR_{t1-t2}$), (v) the net amount of ground water extracted from aquifer for industrial use ($QE$ - $I_{t1-t2}$ ), (vi) the drought index ($DI_{t1-t2}$ ), (vii) the seismic index ($SI_{t1-t2}$ ), (viii) the amount of total surface deformation ($SD_{t1-t2}$ ), while predicting the ground water level ($GWL_{t1-t2}$ ) of the predefined geographical region for the time period $t1$ and $t2$.

In an embodiment, an Analytic Hierarchy Process (AHP) technique is used to assign weights to different criteria or parameters based on their relative importance. It involves pairwise comparisons to determine the significance of each parameter in relation to the others. An example is provided below to assign weights while predicting the ground water level ($GWL_{t1-t2}$ ) of the predefined geographical region for the time period $t1$ and $t2$.

Step 1: Pairwise Comparisons: Each parameter is compared against every other parameter to derive their relative importance.

Let's assume a scale from 1 to 9:

1: Equal importance
3: Slightly more important
5: Clearly more important
7: Strongly more important
9: Extremely more important

Now, a hypothetical comparison matrix could look like this:

| Parameters | Rainwater Infiltration | Agricultural Extraction | Population Extraction | Surface Water Infiltration | Industrial Extraction | Drought Index | Seismic Index | Surface Deformation |
|---|---|---|---|---|---|---|---|---|
| Rainwater Infiltration | 1 | 3 | 5 | 3 | 3 | 7 | 5 | 5 |
| Agricultural Extraction | 1/3 (1/3) | 1 | 3 | 3 | 3 | 5 | 3 | 3 |

(continued)

| Parameters | Rainwater Infiltration | Agricultural Extraction | Population Extraction | Surface Water Infiltration | Industrial Extraction | Drought Index | Seismic Index | Surface Deformation |
|---|---|---|---|---|---|---|---|---|
| Population Extraction | 1/5 (1/5) | 1/3 (1/3) | 1 | 3 | 3 | 7 | 5 | 5 |
| Surface Water Infiltration | 1/3 (1/3) | 1/3 (1/3) | 1/3 (1/3) | 1 | 3 | 5 | 3 | 3 |
| Industrial Extraction | 1/3 (1/3) | 1/3 (1/3) | 1/3 (1/3) | 1/3 (1/3) | 1 | 3 | 3 | 3 |
| Drought Index | 1/7 (1/7) | 1/5 (1/5) | 1/7 (1/7) | 1/5 (1/5) | 1/3 (1/3) | 1 | 3 | 3 |
| Seismic Index | 1/5 (1/5) | 1/3 (1/3) | 1/5 (1/5) | 1/3 (1/3) | 1/3 (1/3) | 1/3 (1/3) | 1 | 3 |
| Surface Deformation | 1/5 (1/5) | 1/3 (1/3) | 1/5 (1/5) | 1/3 (1/3) | 1/3 (1/3) | 1/3 (1/3) | 1/3 (1/3) | |

Step 2: Calculate Relative Weights: The next step involves synthesizing these comparisons to obtain the relative weights of each parameter. This is done by calculating the eigenvector or averaging the values in each column. After performing these calculations, relative weights for each parameter are obtained. Let's say after calculations, these weights are as follows:

Rainwater Infiltration: 0.25
Agricultural Extraction: 0.15
Population Extraction: 0.12
Surface Water Infiltration: 0.1
Industrial Extraction: 0.08
Drought Index: 0.18
Seismic Index: 0.06
Surface Deformation: 0.06

Step 3: Ground water level calculation: Now with the derived weights, the ground water level ($GWL_{t1\text{-}t2}$) is determined using these parameters and weights as:

$$GWL_{t1-t2} = K \times (weight\ 1 \times parameter\ 1 + weight\ 2 \times parameter\ 2 + \cdots + weight\ 8 \times parameter\ 8) \qquad (26)$$

Where K is a normalization factor ensuring the sum of weighted parameters equals 1.

At step 324 of the method 300, the one or more hardware processors 104 of the system 100 are configured to receive a forecasted input data associated to the predefined geographical region for which a ground water level is to be predicted, from the remote sensing satellite data and one or more input information sources.

At step 326 of the method 300, the one or more hardware processors 104 of the system 100 are configured determine a forecasted input parameter data is of the predefined time period and comprises of (i) the one or more weather related parameters, (ii) the one or more soil related parameters, (iii) the one or more agriculture related parameters, (iv) the one or more population related parameters, (v) the one or more surface water related parameters, (vi) the one or more industry related parameters, (vii) the one or more drought related parameters, (viii) the one or more seismic related parameters, and (ix) the one or more surface deformation related parameters.

At step 328 of the method 300, the one or more hardware processors 104 of the system 100 are configured to determine (i) the amount of total surface water from rainfall infiltrated to aquifer during the predefined time period, (ii) the amount of ground water extracted from aquifer for agriculture during the predefined time period, (iii) the net amount of ground water extracted from aquifer by population during the predefined time period, (iv) the net amount of ground water infiltrated to aquifer through one or more water sources during the predefined time period, (v) the net amount of ground water extracted from aquifer for industrial use during the predefined time period, (vi) the drought index for the predefined time period, (vii) the seismic index for the predefined time period, (viii) the amount of total surface deformation during the predefined time period, from the forecasted input parameter data.

At step 330 of the method 300, the one or more hardware processors 104 of the system 100 are configured to pass (i) the amount of total surface water from rainfall infiltrated to aquifer during the predefined time period, (ii) the amount of ground water extracted from aquifer for agriculture during the predefined time period, (iii) the net amount of ground water extracted from aquifer by population during the predefined time period, (iv) the net amount of ground water infiltrated to aquifer through one or more water sources during the predefined time period, (v) the net amount of ground water extracted from aquifer for industrial use during the predefined time period, (vi) the drought index for the predefined time period, (vii) the seismic index for the predefined time period, (viii) the amount of total surface deformation during the predefined time period, to the process-based weighted integrated forecasting model 218, to predict a forecasted ground water level of the predefined geographical region.

The methods and systems of the present disclosure considers parameters such as weather conditions, soil properties, agriculture data, population data, water resources information, industry details, drought information, seismic data, and surface deformation trends over the years for the specific region, to predict the current and future ground water level based on the required time period.

The present disclosure predicts ground water situation i.e. rising or declining for a given region based on the archived remote sensing and comprehensive auxiliary datasets i.e. weather conditions, soil properties, agriculture data, population data, water resources information, industry details, drought information, seismic data, and surface deformation trends. The present disclosure also considers different future scenarios such as cropping pattern, weather conditions, use of irrigation system etc. Accurate ground water prediction over the large duration based on our proposed approach can help farmers to plan their irrigation practices effectively. Also, the present disclosure enables farmers to make informed decisions about the types of crops they should cultivate. Hence the present disclosure has the potential to scale up and implement in any part of the world.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

The embodiments of the present disclosure herein address unresolved problem of ground water prediction using integration of satellite and auxiliary observations. The present disclosure considers various parameter data such as weather conditions, soil properties, agriculture data, population data, water resources information, industry details, drought information, seismic data, and surface deformation trends over the years for the specific region, to predict the current and future ground water level based on the required time period. The ground water forecasting allows for a more comprehensive understanding of the system dynamics and helps develop effective strategies for sustainable ground water management.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means, and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

**Claims**

1.   A processor-implemented method (300), comprising:

receiving, via one or more hardware processors, an input data associated to a predefined geographical region for which ground water level is to be predicted, from a remote sensing satellite data and one or more input information sources (302);
determining, via the one or more hardware processors, an input parameter data associated to the predefined geographical region for which the ground water level is to be predicted, from the input data, wherein the input parameter data is of a predefined time period and comprises one or more of (i) one or more weather related parameters, (ii) one or more soil related parameters, (iii) one or more agriculture related parameters, (iv) one or more population related parameters, (v) one or more surface water related parameters, (vi) one or more industry related parameters, (vii) one or more drought related parameters, (viii) one or more seismic related parameters, and (ix) one or more surface deformation related parameters (304);
passing, via the one or more hardware processors, the input parameter data of the one or more weather related parameters and the one or more soil related parameters, to a weather and soil process-based model, to obtain an amount of total surface water from rainfall infiltrated to aquifer during the predefined time period (306);
passing, via the one or more hardware processors, the input parameter data of the one or more agriculture related parameters, to an agriculture process-based model, to obtain an amount of ground water extracted from aquifer for agriculture during the predefined time period (308);
passing, via the one or more hardware processors, the input parameter data of the one or more population related parameters, to a population process-based model, to obtain a net amount of ground water extracted from aquifer by population during the predefined time period (310);
passing, via the one or more hardware processors, the input parameter data of the one or more soil related parameters and the one or more surface water related parameters, to a soil and surface process-based model, to obtain a net amount of ground water infiltrated to aquifer through one or more water sources during the predefined time period (312);
passing, via the one or more hardware processors, the input parameter data of the one or more industry related parameters, to an industry process-based model, to obtain a net amount of ground water extracted from aquifer for industrial use during the predefined time period (314);
passing, via the one or more hardware processors, the input parameter data of the one or more drought related parameters, to a pretrained machine learning model for drought, to obtain a drought index for the predefined time period (316);
passing, via the one or more hardware processors, the input parameter data of the one or more seismic related parameters, to a seismic process-based model, to obtain a seismic index for the predefined time period (318);
passing, via the one or more hardware processors, the input parameter data of the one or more surface deformation related parameters, to a surface deformation process-based model, to obtain an amount of total surface deformation during the predefined time period (320); and

passing, via the one or more hardware processors, (i) the amount of total surface water from rainfall infiltrated to aquifer during the predefined time period, (ii) the amount of ground water extracted from aquifer for agriculture during the predefined time period, (iii) the net amount of ground water extracted from aquifer by population during the predefined time period, (iv) the net amount of ground water infiltrated to aquifer through one or more water sources during the predefined time period, (v) the net amount of ground water extracted from aquifer for industrial use during the predefined time period, (vi) the drought index for the predefined time period, (vii) the seismic index for the predefined time period, (viii) the amount of total surface deformation during the predefined time period, to a process-based weighted integrated forecasting model, to predict the ground water level of the predefined geographical region (322).

2. The processor-implemented method (300) as claimed in claim 1, further comprising:

receiving, via the one or more hardware processors, a forecasted input data associated to the predefined geographical region for which a ground water level is to be predicted, from the remote sensing satellite data and one or more input information sources (324);
determining, the via one or more hardware processors, a forecasted input parameter data is of the predefined time period and comprises of (i) the one or more weather related parameters, (ii) the one or more soil related parameters, (iii) the one or more agriculture related parameters, (iv) the one or more population related parameters, (v) the one or more surface water related parameters, (vi) the one or more industry related parameters, (vii) the one or more drought related parameters, (viii) the one or more seismic related parameters, and (ix) the one or more surface deformation related parameters (326);
determining, via the one or more hardware processors, (i) the amount of total surface water from rainfall infiltrated to aquifer during the predefined time period, (ii) the amount of ground water extracted from aquifer for agriculture during the predefined time period, (iii) the net amount of ground water extracted from aquifer by population during the predefined time period, (iv) the net amount of ground water infiltrated to aquifer through one or more water sources during the predefined time period, (v) the net amount of ground water extracted from aquifer for industrial use during the predefined time period, (vi) the drought index for the predefined time period, (vii) the seismic index for the predefined time period, (viii) the amount of total surface deformation during the predefined time period, from the forecasted input parameter data (328); and
passing, via the one or more hardware processors, (i) the amount of total surface water from rainfall infiltrated to aquifer during the predefined time period, (ii) the amount of ground water extracted from aquifer for agriculture during the predefined time period, (iii) the net amount of ground water extracted from aquifer by population during the predefined time period, (iv) the net amount of ground water infiltrated to aquifer through one or more water sources during the predefined time period, (v) the net amount of ground water extracted from aquifer for industrial use during the predefined time period, (vi) the drought index for the predefined time period, (vii) the seismic index for the predefined time period, (viii) the amount of total surface deformation during the predefined time period, to the process-based weighted integrated forecasting model, to predict a forecasted ground water level of the predefined geographical region (330).

3. The processor-implemented method (300) as claimed in claim 1, wherein:

(a) the one or more weather related parameters comprises (i) a daily rainfall, (ii) a daily land surface temperature, and (iii) a daily evapotranspiration rate,
(b) the one or more soil related parameters comprises (i) a soil type, (ii) a soil compaction index (SCI), (iii) a soil saturation level (SSL), and (iv) a soil infiltration capacity,
(c) the one or more agriculture related parameters comprises (i) a total agriculture area, (ii) a type of crop grown in each season, and (iii) a crop grown area in each season,
(d) the one or more population related parameters comprises (i) a year-wise population amount, (ii) a population growth rate, (iii) a year-wise number of residential establishments, (iv) a year-wise number of residential establishments with ground water recharge facilities, and (v) a year-wise area of residential establishments with ground water recharge facilities,
(e) the one or more surface water related parameters comprises (i) a total area of one or more water reserve sources, and (ii) a total water holding capacity of the one or more water reserve sources,
(f) the one or more industry related parameters comprises (i) a year-wise number of industry establishments, (ii) year-wise type of industry establishments, (iii) a year-wise total amount of ground water utilized by industry establishments, (iv) a year-wise number of industry establishments with ground water recharge facilities, (v) a year-wise area of permanent industry establishments with ground water recharge facilities, and (vi) a year-wise total amount of rain water given to aquifer by industry establishments,

(g) the one or more drought related parameters comprises (i) a season-wise spatially distributed drought affected area, and (ii) a season-wise spatially distributed drought intensity,

(h) the one or more seismic related parameters comprises (i) a region of interest (RoI) seismic zone type, and (ii) a year-wise seismic magnitude, and

(i) the one or more surface deformation related parameters comprises a year-wise amount of land surface deformation.

4. A system (100), comprising:

a memory (102) storing instructions;
one or more input/output (I/O) interfaces (106); and
one or more hardware processors (104) coupled to the memory (102) via the one or more I/O interfaces (106), wherein the one or more hardware processors (104) are configured by the instructions to:

receive an input data associated to a predefined geographical region for which a ground water level is to be predicted, from a remote sensing satellite data and one or more input information sources;

determine an input parameter data associated to the predefined geographical region for which the ground water level is to be predicted, from the input data, wherein the input parameter data is of a predefined time period and comprises one or more of (i) one or more weather related parameters, (ii) one or more soil related parameters, (iii) one or more agriculture related parameters, (iv) one or more population related parameters, (v) one or more surface water related parameters, (vi) one or more industry related parameters, (vii) one or more drought related parameters, (viii) one or more seismic related parameters, and (ix) one or more surface deformation related parameters;

pass the input parameter data of the one or more weather related parameters and the one or more soil related parameters, to a weather and soil process-based model, to obtain an amount of total surface water from rainfall infiltrated to aquifer during the predefined time period;

pass the input parameter data of the one or more agriculture related parameters, to an agriculture process-based model, to obtain an amount of ground water extracted from aquifer for agriculture during the predefined time period;

pass the input parameter data of the one or more population related parameters, to a population process-based model, to obtain a net amount of ground water extracted from aquifer by population during the predefined time period;

pass the input parameter data of the one or more soil related parameters and the one or more surface water related parameters, to a soil and surface process-based model, to obtain a net amount of ground water infiltrated to aquifer through one or more water sources during the predefined time period;

pass the input parameter data of the one or more industry related parameters, to an industry process-based model, to obtain a net amount of ground water extracted from aquifer for industrial use during the predefined time period;

pass the input parameter data of the one or more drought related parameters, to a pretrained machine learning model for drought, to obtain a drought index for the predefined time period;

pass the input parameter data of the one or more seismic related parameters, to a seismic process-based model, to obtain a seismic index for the predefined time period;

pass the input parameter data of the one or more surface deformation related parameters, to a surface deformation process-based model, to obtain an amount of total surface deformation during the predefined time period; and

pass (i) the amount of total surface water from rainfall infiltrated to aquifer during the predefined time period, (ii) the amount of ground water extracted from aquifer for agriculture during the predefined time period, (iii) the net amount of ground water extracted from aquifer by population during the predefined time period, (iv) the net amount of ground water infiltrated to aquifer through one or more water sources during the predefined time period, (v) the net amount of ground water extracted from aquifer for industrial use during the predefined time period, (vi) the drought index for the predefined time period, (vii) the seismic index for the predefined time period, (viii) the amount of total surface deformation during the predefined time period, to a process-based weighted integrated forecasting model, to predict the ground water level of the predefined geographical region.

5. The system (100) as claimed in claim 4, wherein the one or more hardware processors (104) are further configured to:

receive a forecasted input data associated to the predefined geographical region for which a ground water level is to be predicted, from the remote sensing satellite data and one or more input information sources;
determine a forecasted input parameter data is of the predefined time period and comprises of (i) the one or more weather related parameters, (ii) the one or more soil related parameters, (iii) the one or more agriculture related parameters, (iv) the one or more population related parameters, (v) the one or more surface water related parameters, (vi) the one or more industry related parameters, (vii) the one or more drought related parameters, (viii) the one or more seismic related parameters, and (ix) the one or more surface deformation related parameters;
determine (i) the amount of total surface water from rainfall infiltrated to aquifer during the predefined time period, (ii) the amount of ground water extracted from aquifer for agriculture during the predefined time period, (iii) the net amount of ground water extracted from aquifer by population during the predefined time period, (iv) the net amount of ground water infiltrated to aquifer through one or more water sources during the predefined time period, (v) the net amount of ground water extracted from aquifer for industrial use during the predefined time period, (vi) the drought index for the predefined time period, (vii) the seismic index for the predefined time period, (viii) the amount of total surface deformation during the predefined time period, from the forecasted input parameter data; and
pass (i) the amount of total surface water from rainfall infiltrated to aquifer during the predefined time period, (ii) the amount of ground water extracted from aquifer for agriculture during the predefined time period, (iii) the net amount of ground water extracted from aquifer by population during the predefined time period, (iv) the net amount of ground water infiltrated to aquifer through one or more water sources during the predefined time period, (v) the net amount of ground water extracted from aquifer for industrial use during the predefined time period, (vi) the drought index for the predefined time period, (vii) the seismic index for the predefined time period, (viii) the amount of total surface deformation during the predefined time period, to the process-based weighted integrated forecasting model, to predict a forecasted ground water level of the predefined geographical region.

6. The system (100) as claimed in claim 4, wherein:

(a) the one or more weather related parameters comprises (i) a daily rainfall, (ii) a daily land surface temperature, and (iii) a daily evapotranspiration rate,
(b) the one or more soil related parameters comprises (i) a soil type, (ii) a soil compaction index (SCI), (iii) a soil saturation level (SSL), and (iv) a soil infiltration capacity,
(c) the one or more agriculture related parameters comprises (i) a total agriculture area, (ii) a type of crop grown in each season, and (iii) a crop grown area in each season,
(d) the one or more population related parameters comprises (i) a year-wise population amount, (ii) a population growth rate, (iii) a year-wise number of residential establishments, (iv) a year-wise number of residential establishments with ground water recharge facilities, and (v) a year-wise area of residential establishments with ground water recharge facilities,
(e) the one or more surface water related parameters comprises (i) a total area of one or more water reserve sources, and (ii) a total water holding capacity of the one or more water reserve sources,
(f) the one or more industry related parameters comprises (i) a year-wise number of industry establishments, (ii) year-wise type of industry establishments, (iii) a year-wise total amount of ground water utilized by industry establishments, (iv) a year-wise number of industry establishments with ground water recharge facilities, (v) a year-wise area of permanent industry establishments with ground water recharge facilities, and (vi) a year-wise total amount of rain water given to aquifer by industry establishments,
(g) the one or more drought related parameters comprises (i) a season-wise spatially distributed drought affected area, and (ii) a season-wise spatially distributed drought intensity,
(h) the one or more seismic related parameters comprises (i) a region of interest (RoI) seismic zone type, and (ii) a year-wise seismic magnitude, and
(i) the one or more surface deformation related parameters comprises a year-wise amount of land surface deformation.

7. One or more non-transitory machine-readable information storage mediums comprising one or more instructions which when executed by one or more hardware processors, cause:

receiving an input data associated to a predefined geographical region for which ground water level is to be predicted, from a remote sensing satellite data and one or more input information sources;
determining an input parameter data associated to the predefined geographical region for which the ground water level is to be predicted, from the input data, wherein the input parameter data is of a predefined time period and comprises one or more of (i) one or more weather related parameters, (ii) one or more soil related parameters, (iii) one or more agriculture related parameters, (iv) one or more population related parameters, (v) one or more surface water related parameters, (vi) one or more industry related parameters, (vii) one or more drought related parameters, (viii) one or more seismic related parameters, and (ix) one or more surface deformation related parameters;

passing the input parameter data of the one or more weather related parameters and the one or more soil related parameters, to a weather and soil process-based model, to obtain an amount of total surface water from rainfall infiltrated to aquifer during the predefined time period;

passing the input parameter data of the one or more agriculture related parameters, to an agriculture process-based model, to obtain an amount of ground water extracted from aquifer for agriculture during the predefined time period;

passing the input parameter data of the one or more population related parameters, to a population process-based model, to obtain a net amount of ground water extracted from aquifer by population during the predefined time period;

passing the input parameter data of the one or more soil related parameters and the one or more surface water related parameters, to a soil and surface process-based model, to obtain a net amount of ground water infiltrated to aquifer through one or more water sources during the predefined time period;

passing the input parameter data of the one or more industry related parameters, to an industry process-based model, to obtain a net amount of ground water extracted from aquifer for industrial use during the predefined time period;

passing the input parameter data of the one or more drought related parameters, to a pretrained machine learning model for drought, to obtain a drought index for the predefined time period;

passing the input parameter data of the one or more seismic related parameters, to a seismic process-based model, to obtain a seismic index for the predefined time period;

passing the input parameter data of the one or more surface deformation related parameters, to a surface deformation process-based model, to obtain an amount of total surface deformation during the predefined time period; and

passing (i) the amount of total surface water from rainfall infiltrated to aquifer during the predefined time period, (ii) the amount of ground water extracted from aquifer for agriculture during the predefined time period, (iii) the net amount of ground water extracted from aquifer by population during the predefined time period, (iv) the net amount of ground water infiltrated to aquifer through one or more water sources during the predefined time period, (v) the net amount of ground water extracted from aquifer for industrial use during the predefined time period, (vi) the drought index for the predefined time period, (vii) the seismic index for the predefined time period, (viii) the amount of total surface deformation during the predefined time period, to a process-based weighted integrated forecasting model, to predict the ground water level of the predefined geographical region.

8. The one or more non-transitory machine-readable information storage mediums as claimed in claim 7, comprising the one or more instructions which when executed by the one or more hardware processors further cause:

receiving a forecasted input data associated to the predefined geographical region for which a ground water level is to be predicted, from the remote sensing satellite data and one or more input information sources;

determining the a forecasted input parameter data is of the predefined time period and comprises of (i) the one or more weather related parameters, (ii) the one or more soil related parameters, (iii) the one or more agriculture related parameters, (iv) the one or more population related parameters, (v) the one or more surface water related parameters, (vi) the one or more industry related parameters, (vii) the one or more drought related parameters, (viii) the one or more seismic related parameters, and (ix) the one or more surface deformation related parameters;

determining (i) the amount of total surface water from rainfall infiltrated to aquifer during the predefined time period, (ii) the amount of ground water extracted from aquifer for agriculture during the predefined time period, (iii) the net amount of ground water extracted from aquifer by population during the predefined time period, (iv) the net amount of ground water infiltrated to aquifer through one or more water sources during the predefined time period, (v) the net amount of ground water extracted from aquifer for industrial use during the predefined time period, (vi) the drought index for the predefined time period, (vii) the seismic index for the predefined time period, (viii) the amount of total surface deformation during the predefined time period, from the forecasted input parameter data; and

passing (i) the amount of total surface water from rainfall infiltrated to aquifer during the predefined time period, (ii) the amount of ground water extracted from aquifer for agriculture during the predefined time period, (iii) the net amount of ground water extracted from aquifer by population during the predefined time period, (iv) the net amount of ground water infiltrated to aquifer through one or more water sources during the predefined time period, (v) the net amount of ground water extracted from aquifer for industrial use during the predefined time period, (vi) the drought index for the predefined time period, (vii) the seismic index for the predefined time period, (viii) the amount of total surface deformation during the predefined time period, to the process-based weighted integrated forecasting model, to predict a forecasted ground water level of the predefined geographical region (330).

9. The one or more non-transitory machine-readable information storage mediums as claimed in claim 7, wherein:

(a) the one or more weather related parameters comprises (i) a daily rainfall, (ii) a daily land surface temperature, and (iii) a daily evapotranspiration rate,

(b) the one or more soil related parameters comprises (i) a soil type, (ii) a soil compaction index (SCI), (iii) a soil saturation level (SSL), and (iv) a soil infiltration capacity,

(c) the one or more agriculture related parameters comprises (i) a total agriculture area, (ii) a type of crop grown in each season, and (iii) a crop grown area in each season,

(d) the one or more population related parameters comprises (i) a year-wise population amount, (ii) a population growth rate, (iii) a year-wise number of residential establishments, (iv) a year-wise number of residential establishments with ground water recharge facilities, and (v) a year-wise area of residential establishments with ground water recharge facilities,

(e) the one or more surface water related parameters comprises (i) a total area of one or more water reserve sources, and (ii) a total water holding capacity of the one or more water reserve sources,

(f) the one or more industry related parameters comprises (i) a year-wise number of industry establishments, (ii) year-wise type of industry establishments, (iii) a year-wise total amount of ground water utilized by industry establishments, (iv) a year-wise number of industry establishments with ground water recharge facilities, (v) a year-wise area of permanent industry establishments with ground water recharge facilities, and (vi) a year-wise total amount of rain water given to aquifer by industry establishments,

(g) the one or more drought related parameters comprises (i) a season-wise spatially distributed drought affected area, and (ii) a season-wise spatially distributed drought intensity,

(h) the one or more seismic related parameters comprises (i) a region of interest (RoI) seismic zone type, and (ii) a year-wise seismic magnitude, and

(i) the one or more surface deformation related parameters comprises a year-wise amount of land surface deformation.

FIG. 1

202
Weather and soil
process-based model

204
Agriculture process-
based model

206
Population process-
based model

208
Soil and surface
process-based model

210
Industry process-based
model

212
Pretrained machine
learning model for
drought

214
Seismic process-based
model

216
Surface deformation
process-based model

218
Process-based weighted
integrated forecasting model

Ground
water level

FIG. 2

300

Receive an input data associated to a predefined geographical region for which a ground water level to be predicted, from a remote sensing satellite data and one or more input information sources — 302

Determine an input parameter data associated to the predefined geographical region for which the ground water level to be predicted, from the input data, wherein the input parameter data is of a predefined time period and comprises one or more of (i) one or more weather related parameters, (ii) one or more soil related parameters, (iii) one or more agriculture related parameters, (iv) one or more population related parameters, (v) one or more surface water related parameters, (vi) one or more industry related parameters, (vii) one or more drought related parameters, (viii) one or more seismic related parameters, and (ix) one or more surface deformation related parameters — 304

Pass the input parameter data of the one or more weather related parameters and the one or more soil related parameters, to a weather and soil process-based model, to obtain an amount of total surface water from rainfall infiltrated to aquifer during the predefined time period — 306

Pass the input parameter data of the one or more agriculture related parameters, to an agriculture process-based model, to obtain an amount of ground water extracted from aquifer for agriculture during the predefined time period — 308

Pass the input parameter data of the one or more population related parameters, to a population process-based model, to obtain a net amount of ground water extracted from aquifer by population during the predefined time period — 310

Pass the input parameter data of the one or more soil related parameters and the one or more surface water related parameters, to a soil and surface process-based model, to obtain a net amount of ground water infiltrated to aquifer through one or more water sources during the predefined time period — 312

A

FIG. 3A

A

Pass the input parameter data of the one or more industry related parameters, to an industry process-based model, to obtain a net amount of ground water extracted from aquifer for industrial use during the predefined time period — 314

Pass the input parameter data of the one or more drought related parameters, to a pretrained machine learning model for drought, to obtain a drought index for the predefined time period — 316

Pass the input parameter data of the one or more seismic related parameters, to a seismic process-based model, to obtain a seismic index for the predefined time period — 318

Pass the input parameter data of the one or more surface deformation related parameters, to a surface deformation process-based model, to obtain an amount of total surface deformation during the predefined time period — 320

Pass (i) the amount of total surface water from rainfall infiltrated to aquifer during the predefined time period, (ii) the amount of ground water extracted from aquifer for agriculture during the predefined time period, (iii) the net amount of ground water extracted from aquifer by population during the predefined time period, (iv) the net amount of ground water infiltrated to aquifer through one or more water sources during the predefined time period, (v) the net amount of ground water extracted from aquifer for industrial use during the predefined time period, (vi) the drought index for the predefined time period, (vii) the seismic index for the predefined time period, (viii) the amount of total surface deformation during the predefined time period, to a process-based weighted integrated forecasting model, to predict the ground water level of the predefined geographical region — 322

B

FIG. 3B

B

Receive a forecasted input data associated to the predefined geographical region for which a ground water level to be predicted, from the remote sensing satellite data and one or more input information sources — 324

Determine a forecasted input parameter data is of the predefined time period and comprises of (i) the one or more weather related parameters, (ii) the one or more soil related parameters, (iii) the one or more agriculture related parameters, (iv) the one or more population related parameters, (v) the one or more surface water related parameters, (vi) the one or more industry related parameters, (vii) the one or more drought related parameters, (viii) the one or more seismic related parameters, and (ix) the one or more surface deformation related parameters — 326

Determine (i) the amount of total surface water from rainfall infiltrated to aquifer during the predefined time period, (ii) the amount of ground water extracted from aquifer for agriculture during the predefined time period, (iii) the net amount of ground water extracted from aquifer by population during the predefined time period, (iv) the net amount of ground water infiltrated to aquifer through one or more water sources during the predefined time period, (v) the net amount of ground water extracted from aquifer for industrial use during the predefined time period, (vi) the drought index for the predefined time period, (vii) the seismic index for the predefined time period, (viii) the amount of total surface deformation during the predefined time period, from the forecasted input parameter data — 328

Pass (i) the amount of total surface water from rainfall infiltrated to aquifer during the predefined time period, (ii) the amount of ground water extracted from aquifer for agriculture during the predefined time period, (iii) the net amount of ground water extracted from aquifer by population during the predefined time period, (iv) the net amount of ground water infiltrated to aquifer through one or more water sources during the predefined time period, (v) the net amount of ground water extracted from aquifer for industrial use during the predefined time period, (vi) the drought index for the predefined time period, (vii) the seismic index for the predefined time period, (viii) the amount of total surface deformation during the predefined time period, to the process-based weighted integrated forecasting model, to predict a forecasted ground water level of the predefined geographical region — 330

FIG. 3C

| | Europäisches Patentamt European Patent Office Office européen des brevets | **EUROPEAN SEARCH REPORT** | **Application Number** EP 25 15 1629 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SEO JAE YOUNG ET AL: "Predicting Changes in Spatiotemporal Groundwater Storage Through the Integration of Multi-Satellite Data and Deep Learning Models", IEEE ACCESS, IEEE, USA, vol. 9, 23 November 2021 (2021-11-23), pages 157571-157583, XP011891040, DOI: 10.1109/ACCESS.2021.3130306 [retrieved on 2021-12-01] * cf. sections I and II. * ----- | 1-9 | INV. G06Q10/04 G06Q50/02 ADD. G01W1/14 |

**TECHNICAL FIELDS SEARCHED (IPC)**

G06Q
G01W

The present search report has been drawn up for all claims

| Place of search | Date of completion of the search | Examiner |
|---|---|---|
| Munich | 26 May 2025 | Reino, Bernardo |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IN 202421004041